# EUROPEAN PATENT APPLICATION

(11) **EP 4 633 261 A1**
(43) Date of publication of application: **15.10.2025**
(21) Application number: 22967604.4
(22) Date of filing: 08.12.2022
(51) Int. Cl.: H04W 72/04, H04W 72/12

(54) **METHOD AND APPARATUS FOR PROCESSING WIRELESS TRANSMISSION, DEVICE, STORAGE MEDIUM, AND PRODUCT**

(71) Applicant: GUANGDONG OPPO MOBILE TELECOMMUNICATIONS CORP., LTD., Dongguan, Guangdong 523860 (CN)
(72) Inventor: FU, Zhe, Dongguan, Guangdong 523860 (CN); LIN, Yanan, Dongguan, Guangdong 523860 (CN); SHI, Cong, Dongguan, Guangdong 523860 (CN)
(74) Representative: Novagraaf Technologies
(86) International application number: PCT/CN2022/137641
(87) International publication number: WO 2024/119448

(57) **Abstract**

A method and apparatus for processing wireless transmission, a device, a storage medium, and a product, relating to the technical field of wireless communications. The method comprises: according to a selection or a use rule of a first hybrid automatic repeat request (HARQ) process, or according to a transmission or processing mode of a first resource, performing wireless transmission related processing (201), wherein the first HARQ process is an HARQ process meeting a conflict condition, and the first resource is a resource corresponding to the first HARQ process. The solution can improve the transmission efficiency.

## Description

### TECHNICAL FIELD

The present disclosure relates to the technical field of wireless communications, and in particular, relates to a method and apparatus for processing wireless transmission, and a device, a storage medium and a product thereof.

### RELATED ART

Hybrid automatic repeat request (HARQ) is a technology that combines forward error correction coding and an automatic repeat request.

In the related art, in a case where one or more configured grant (CG) resources are present within a CG period, each CG resource location is associated with a corresponding HARQ process.

### SUMMARY

Embodiments of the present disclosure provide a method and apparatus for processing wireless transmission, and a device, a storage medium and a product thereof.

According to some embodiments of the present disclosure, a method for processing wireless transmission is provided. The method includes:

performing wireless transmission-related processing based on a selection or usage rule for a first HARQ process or based on a transmission or processing mode for a first resource, wherein the first HARQ process is an HARQ process satisfying a collision condition, and the first resource is a resource corresponding to the first HARQ process.

According to some embodiments of the present disclosure, an apparatus for processing wireless transmission is provided. The apparatus includes:

a processing module, configured to perform wireless transmission-related processing based on a selection or usage rule for a first HARQ process or based on a transmission or processing mode for a first resource, wherein the first HARQ process is an HARQ process satisfying a collision condition, and the first resource is a resource corresponding to the first HARQ process.

According to some embodiments of the present disclosure, a terminal device is provided. The terminal device includes a processor, a memory, and a transceiver.

The processor is configured to perform wireless transmission-related processing based on a selection or usage rule for a first HARQ process or based on a transmission or processing mode for a first resource, wherein the first HARQ process is an HARQ process satisfying a collision condition, and the first resource is a resource corresponding to the first HARQ process.

According to some embodiments of the present disclosure, a computer-readable storage medium is provided. The computer-readable storage medium stores one or more computer programs therein, wherein the one or more computer programs, when loaded and run by a processor, cause the processor to perform the method for processing wireless transmission described above.

According to some embodiments of the present disclosure, a computer program product or computer program is provided. The computer program product or computer program includes one or more computer instructions stored in a computer-readable storage medium. The one or more computer instructions, when read from the computer-readable storage medium and executed by a processor of a terminal device or a network device, cause the terminal device or the network device to perform the method for processing wireless transmission described above.

According to some embodiments of the present disclosure, a computer program is provided. The computer program includes one or more computer instructions. The one or more computer instructions, when executed by a processor of a terminal device or a network device, cause the terminal device or the network device to perform the method for processing wireless transmission described above.

According to some embodiments of the present disclosure, a chip is provided. The chip is configured to perform the method for processing wireless transmission described above.

The technical solutions according to the embodiments of the present disclosure achieve the following beneficial effects.

The terminal device performs wireless transmission-related processing based on a selection or usage rule for the first HARQ process that satisfies a collision condition or based on a transmission or processing mode for the first resource corresponding to the first HARQ process. In the above solution, the selection or usage of the HARQ process that satisfies the collision condition is taken into consideration during wireless transmission, which prevents transmission failures of MAC PDUs in the HARQ process that need to be used/reserved due to HARQ process collisions, such that transmission efficiency is improved.

### BRIEF DESCRIPTION OF DRAWINGS

For clearer descriptions of the technical solutions according to the embodiments of the present disclosure, the accompanying drawings required for describing the embodiments are briefly introduced hereinafter. Apparently, the accompanying drawings in the following description show merely some embodiments of the present disclosure, and those of ordinary skill in the art may still derive other drawings from these accompanying drawings without creative efforts.
FIG. 1 is a schematic diagram of an architecture of a communication system according to some embodiments of the present disclosure;
FIG. 2 is a flowchart of a method for processing wireless transmission according to some embodiments of the present disclosure;
FIG. 3 is a flowchart of a method for processing wireless transmission according to some embodiments of the present disclosure;
FIG. 4 is a schematic diagram of wireless transmission according to some embodiments of the present disclosure;
FIG. 5 is a block diagram of an apparatus for processing wireless transmission according to some embodiments of the present disclosure; and
FIG. 6 is schematic structural diagram of a device according to some embodiments of the present disclosure.

### DETAILED DESCRIPTION

For clearer descriptions of the objectives, technical solutions, and advantages of the present disclosure, embodiments of the present disclosure are further described in detail hereinafter with reference to the accompanying drawings.

The network architecture and service scenarios described in the embodiments of the present disclosure are intended to describe the technical solutions according to the embodiments of the present disclosure more clearly, but do not constitute limitations on the technical solutions according to the embodiments of the present disclosure. Those of ordinary skill in the art may understand that, with the evolution of the network architecture and the emergence of new service scenarios, the technical solutions according to the embodiments of the present disclosure are also applicable to addressing similar technical problems.

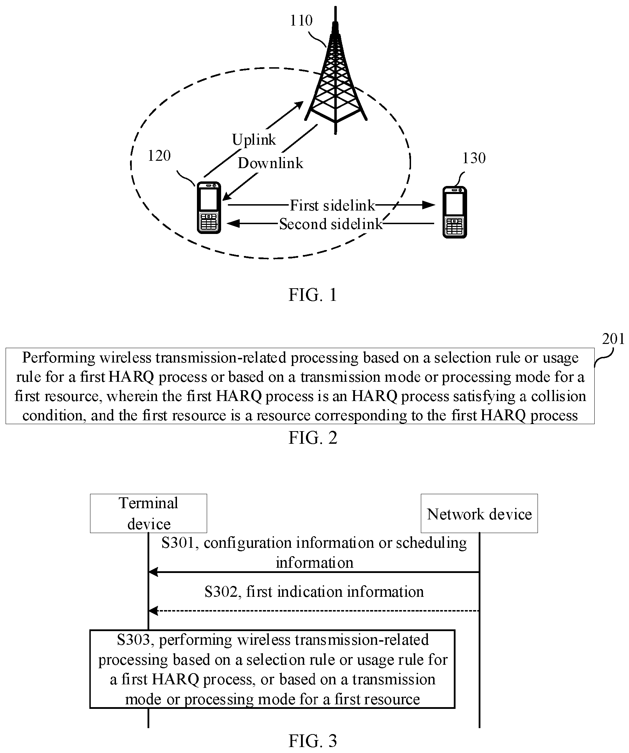

FIG. 1 is a schematic diagram of a communication system according to some embodiments of the present disclosure. The communication system includes a network device 110 and a terminal device 120, and/or a terminal device 120 and a terminal device 130, which is not limited in the present disclosure.

The network device 110 according to the present disclosure provides a wireless communication function. The network device 110 includes, but is not limited to, an evolved NodeB (eNB), a radio network controller (RNC), a NodeB (NB), a base station controller (BSC), a base transceiver station (BTS), a home base station (such as a home eNB or a home NB (HNB)), a baseband unit (BBU), an access point (AP) in a wireless fidelity (Wi-Fi) system, a wireless relay node, a wireless backhaul node, a transmission point (TP), or a transmission and reception point (TRP); or may be a gNodeB (gNB), a transmission point (TRP or TP) in a 5^{th}-generation (5G) mobile communication system, one antenna panel or a group of antenna panels (including a plurality of antenna panels) of a base station in a 5G system, a network node constituting a gNB or a TP, such as a BBU or a distributed unit (DU), a base station in a beyond 5G (B5G) or 6^{th}-generation (6G) mobile communication system, a core network (CN), a fronthaul node, a backhaul node, a radio access network (RAN), a network slice, a serving cell, a primary cell (PCell), a primary secondary cell (PSCell), a special cell (SpCell), a secondary cell (SCell), or a neighboring cell of the terminal device, or the like.

The terminal device 120 and/or the terminal device 130 according to the present disclosure is also referred to as a user equipment (UE), an access terminal, a subscriber unit, a subscriber station, a mobile station, a mobile platform, a remote station, a remote terminal, a mobile device, a user terminal, a terminal, a wireless communication device, a user agent, or a user apparatus. The terminal device includes, but is not limited to, a handheld device, a wearable device, a vehicle-mounted device, and an Internet of things (IoT) device, for example, a mobile phone, a tablet computer, an e-book reader, a laptop computer, a desktop computer, a television, a game console, a mobile Internet device (MID), an augmented reality (AR) terminal, a virtual reality (VR) terminal, a mixed reality (MR) terminal, a wearable device, a game controller, an electronic tag, a controller, a wireless terminal in industrial control, a wireless terminal in self-driving, a wireless terminal in remote medical, a wireless terminal in smart grids, a wireless terminal in transportation safety, a wireless terminal in smart cities, a wireless terminal in smart homes, a wireless terminal in remote medical surgery, a cellular phone, a cordless phone, a Session Initiation Protocol (SIP) phone, a wireless local loop (WLL) station, a personal digital assistant (PDA), a set-top box (STB), a customer premises equipment (CPE), or the like.

The network device 110 is capable of communicating with the terminal device 120 using a specific air interface technology, such as a Uu interface.

For example, two scenarios of communication are present between the network device 110 and the terminal device 120: uplink communication and downlink communication. The uplink communication means transmission of signals to the network device 110. The downlink communication means transmission of signals to the terminal device 120.

The terminal device 120 is capable of communicating with the terminal device 130 using a specific air interface technology, such as a Uu interface.

In some embodiments, the terminal device 120 and the terminal device 130 support two communication scenarios: first sidelink communication and second sidelink communication. The first sidelink communication refers to transmission of signals to the terminal device 130. The second sidelink communication refers to transmission of signals to the terminal device 120.

The terminal device 120 and the terminal device 130 are within network coverage and located in the same cell, or the terminal device 120 and the terminal device 130 are within network coverage and located in the different cells, or the terminal device 120 is located within network coverage, and the terminal device 130 is located beyond network coverage.

The technical solutions according to the embodiments of the present disclosure may be applicable to various communication systems, such as a global system for mobile communications (GSM), a code-division multiple access (CDMA) system, a wideband code- division multiple access (WCDMA) system, a general packet radio system (GPRS), a long-term evolution (LTE) system, an LTE frequency division duplex (FDD) system, an LTE time division duplex (TDD) system, an advanced LTE (LTE-A) system, a universal mobile telecommunications system (UMTS), a worldwide interoperability for microwave access (WiMAX) communication system, a 5G mobile communication system, a new radio (NR) system, an evolved system of the NR system, an LTE-based access to unlicensed spectrum (LTE-U) system, an NR-based access to unlicensed spectrum (NR-U) system, a terrestrial network (TN) system, a non-terrestrial network (NTN) system, a wireless local area network (WLAN), a wireless fidelity (Wi-Fi) system, a cellular IoT system, a cellular passive IoT system, an evolved system subsequent to the 5G NR system, a B5G mobile communication system, a 6G mobile communication system, and a subsequent evolved system. In some embodiments of the present disclosure, the "NR system" may also be referred to as the 5G NR system or 5G system. The 5G mobile communication system may include a non-standalone (NSA) mode and/or a standalone (SA) mode.

The technical solutions according to the embodiments of the present disclosure may also be applicable to machine-type communications (MTC), LTE-machine (LTE-M), a device-to-device (D2D) network, a machine-to-machine (M2M) network, an IoT network, or the like. The IoT network may include, for example, the Internet of vehicles (IoV). A communication mode in an IoV system is collectively referred to as Vehicle to X (V2X, X may represent anything). For example, the V2X communications may include vehicle-to-vehicle (V2V) communications, vehicle-to-infrastructure (V2I) communications, vehicle-to-pedestrian (V2P) communications, vehicle-to-network (V2N) communications, or the like.

In the related art, the following enhancements for configured grant-based transmission are recommended:
1) Multiple CG physical uplink shared channel (PUSCH) transmission occasions in a period of a single CG PUSCH configuration.
2) Dynamic indication of unused CG PUSCH occasion(s) based on uplink control information (UCI) (e.g., CG-UCI or new UCI) by the UE.

In the above solution, in a case where one or more CG resources are present within a CG period, each CG resource location corresponds to an HARQ process.

However, the above solution does not account for the case where a plurality of CG resource occasions are present within a CG period. In some embodiments, HARQ processes for different CG occasions within the same CG period may be the same or different. In a case where one or more CG resources are present within a CG period, how to select or use an HARQ process for a CG occasion needs to be clarified.

The solution according to the present disclosure is applicable to CG transmission, dynamic uplink grant (DG) transmission, and also DG + CG transmission.

For example, a plurality of CG transmission occasions or CG PUSCHs are present within a CG period.

For example, one or more CG transmission occasions or CG PUSCHs, and one or more CG configurations are present in a CG period. Different CG configurations correspond to different CG indices.

For example, a plurality of DG PUSCH transmissions are scheduled within a time period or by single downlink control information (DCI).

For example, within a time period, one or more DG PUSCH transmissions are scheduled by single DCI, and meanwhile, one or more CG PUSCH transmissions are activated or indicated. In some embodiments, the time period may be independent of the CG period. In some embodiments, the time period may be one or more CG periods.

For example, one or more CG PUSCH transmissions are present within a time period, and meanwhile, one or more DG PUSCH transmissions are scheduled by DCI. In some embodiments, the time period may be independent of the CG period. In some embodiments, the time period may be one or more CG periods.

For example, one or more DG PUSCH transmissions are scheduled by single DCI, and meanwhile, one or more CG PUSCH transmissions are activated or indicated. In some embodiments, the activated or indicated CG PUSCH may correspond to one or more CG periods.

For example, one or more CG PUSCH transmissions are present, and one or more DG PUSCH transmissions are scheduled by DCI. In some embodiments, the one or more CG PUSCH may correspond to one or more CG periods. In some embodiments, the one or more CG PUSCH may correspond to the same CG index or different CG indices.

FIG. 2 illustrates a flowchart of a method for processing wireless transmission according to some embodiments of the present disclosure. The method may be applicable to a terminal device. The terminal device may be the terminal device 120 or the terminal device 130 in the network architecture illustrated in FIG. 1. The method may include the following processes.

In process 201, the terminal device performs wireless transmission-related processing based on a selection or usage rule for a first HARQ process or based on a transmission or processing mode for a first resource, wherein the first HARQ process is an HARQ process satisfying a collision condition, and the first resource is a resource corresponding to the first HARQ process.

In some embodiments, the process of performing wireless transmission-related processing based on the selection or usage rule for the first HARQ process or based on the transmission or processing mode for the first resource includes:
based on the selection or usage rule for the first HARQ process or based on the transmission or processing mode for the first resource, performing at least one of:
selecting or determining an HARQ process; or
performing a first action.

In some embodiments, the process of selecting or determining the HARQ process includes:
selecting or determining an HARQ process for an uplink grant of the terminal device; or
selecting or determining at least one HARQ process for a plurality of uplink grants of the terminal device; or
selecting or determining an HARQ process corresponding to or available for a CG resource in an uplink grant; or
selecting or determining an HARQ process corresponding to or available for at least one CG occasion of a CG resource; or
selecting or determining an HARQ process corresponding to or available for at least one CG occasion within one period of a CG resource; or
selecting or determining an HARQ process corresponding to or available for each CG occasion within one period of a CG resource; or
selecting or determining an HARQ process corresponding to or available for each CG occasion of a CG resource; or
selecting or determining an HARQ process corresponding to or available for a current CG resource.

In some embodiments, the process of selecting or determining the HARQ process includes at least one of:
selecting or determining the HARQ process based on an HARQ calculation formula and/or terminal device implementation;
selecting or determining the HARQ process based on a priority of a logical channel (LCH) or a priority of the HARQ process;
selecting or determining the HARQ process based on whether a collision occurs, whether the HARQ process is the first HARQ process, or whether the HARQ process is an available HARQ process; or
selecting or determining the HARQ process based on first indication information.

In some embodiments, in selecting or determining the HARQ process, no execution sequence is defined. Specifically, the following sub-steps 1) to 4) hereinafter are not performed in a designated or specific sequence:
1) selecting or determining the HARQ process based on an HARQ calculation formula and/or terminal device implementation;
2) selecting or determining the HARQ process based on a priority of an LCH or a priority of the HARQ process;
3) selecting or determining the HARQ process based on whether a collision occurs, whether the HARQ process is the first HARQ process, or whether the HARQ process is an available HARQ process; and
4) selecting or determining the HARQ process based on first indication information.

That is, in a case where the process of selecting or determining the HARQ process includes at least two of the sub-steps 1) to 4), no execution sequence is defined between the at least two sub-steps.

In some embodiments, in selecting or determining the HARQ process, an execution sequence is defined. Specifically, that sub-steps 1) to 4) hereinafter are performed in a designated or specific sequence:
1) selecting or determining the HARQ process based on an HARQ calculation formula and/or terminal device implementation;
2) selecting or determining the HARQ process based on priorities of LCHs or priorities of the HARQ processes;
3) selecting or determining the HARQ process based on whether a collision occurs, whether the HARQ process is the first HARQ process, or whether the HARQ process is an available HARQ process; and
4) selecting or determining the HARQ process based on first indication information.

For example, initially, the terminal device selects or determines one or more HARQ processes based on an HARQ calculation formula and/or terminal device implementation. Subsequently, from the initially selected HARQ processes, the terminal device selects or determines one or more HARQ processes based on whether a collision occurs, whether the HARQ processes are the first HARQ processes, or whether the HARQ processes are available HARQ processes. Finally, from the subsequently selected HARQ processes, the terminal device selects or determines an HARQ process based on priorities of LCHs or priorities of the HARQ processes.

For example, initially, the terminal device selects or determines one or more HARQ processes based on an HARQ calculation formula and/or terminal device implementation. Subsequently, from the initially selected HARQ processes, based on the first indication information, the terminal device selects or determines one or more HARQ processes based on whether a collision occurs, whether the HARQ processes are the first HARQ processes, or whether the HARQ processes are available HARQ processes. Finally, from the subsequently selected HARQ processes, the terminal device selects or determines an HARQ process based on priorities of LCHs or priorities of the HARQ processes.

For example, initially, the terminal device selects or determines one or more HARQ processes based on an HARQ calculation formula and/or terminal device implementation. Subsequently, from the initially selected HARQ processes, the terminal device selects or determines one or more HARQ processes based on priorities of LCHs or priorities of the HARQ processes. Finally, from the subsequently selected HARQ processes, the terminal device selects or determines an HARQ process based on whether a collision occurs, whether the HARQ processes are the first HARQ processes, or whether the HARQ processes are available HARQ processes.

For example, initially, the terminal device selects or determines one or more HARQ processes based on an HARQ calculation formula and/or terminal device implementation. Subsequently, from the initially selected HARQ processes, the terminal device selects or determines one or more HARQ processes based on priorities of LCHs or priorities of the HARQ processes. Finally, from the subsequently selected HARQ processes, based on the first indication information, the terminal device selects or determines an HARQ process based on whether a collision occurs, whether the HARQ processes are the first HARQ processes, or whether the HARQ processes are available HARQ processes.

For example, initially, based on an HARQ calculation formula and/or terminal device implementation, the terminal device selects or determines one or more HARQ processes based on whether a collision occurs, whether the HARQ processes are the first HARQ processes, or whether the HARQ processes are available HARQ processes. Subsequently, from the selected HARQ processes, the terminal device selects or determines an HARQ process based on priorities of LCHs or priorities of the HARQ processes.

For example, initially, based on an HARQ calculation formula and/or terminal device implementation, and based on the first indication information, the terminal device selects or determines one or more HARQ processes based on whether a collision occurs, whether the HARQ processes are the first HARQ processes, or whether the HARQ processes are available HARQ processes. Subsequently, from the selected HARQ processes, the terminal device selects or determine an HARQ process based on priorities of LCHs or priorities of the HARQ processes.

In some embodiments, the process of selecting or determining the HARQ process includes:
selecting or determining the HARQ process in a first case, wherein the first case includes:
a plurality of candidate HARQ processes for an uplink grant of the terminal device, a plurality of candidate HARQ processes for at least one of a plurality of uplink grants of the terminal device, a plurality of candidate HARQ processes for a CG resource in an uplink grant, a plurality of candidate HARQ processes for at least one CG occasion of a CG resource, a plurality of candidate HARQ processes for at least one CG occasion within one period of a CG resource, a plurality of candidate HARQ processes for each CG occasion within one period of a CG resource, or a plurality of candidate HARQ processes for each CG occasion of a CG resource being present; or
a candidate HARQ process for an uplink grant of the terminal device, a candidate HARQ process for at least one of a plurality of uplink grants of the terminal device, a candidate HARQ process for a CG resource in an uplink grant, a candidate HARQ process for at least one CG occasion of a CG resource, a candidate HARQ process for at least one CG occasion within one period of a CG resource, a candidate HARQ process for each CG occasion within one period of a CG resource, or a candidate HARQ process for each CG occasion of a CG resource being selected by the terminal device.

In some embodiments, the process of selecting or determining the HARQ process includes:
selecting or determining the HARQ process in a second case, wherein the second case includes:
a candidate HARQ process for a CG resource in an uplink grant of the terminal device, a candidate HARQ process for at least one CG occasion of a CG resource, a candidate HARQ process for at least one CG occasion within one period of a CG resource, a candidate HARQ process for each CG occasion within one period of a CG resource, or a candidate HARQ process for each CG occasion of a CG resource being determined by the terminal device based on a formula.

In some embodiments, the process of selecting or determining the HARQ process includes:
selecting or determining whether to use the first HARQ process; or
determining whether to deprioritize the first HARQ process; or
determining whether to prioritize an HARQ process other than the first HARQ process; or
determining whether a candidate HARQ process is an available HARQ process; or
determining whether a candidate HARQ process is the first HARQ process; or
determining whether to use an HARQ process for which a configured grant timer (CGT) or a configured grant retransmission timer (CGRT) has not expired.

In some embodiments, the available HARQ process includes at least one of:
an HARQ process for which the CGT and/or the CGRT has not expired;
an HARQ process for which a first timer has expired or is not running; or
an HARQ process corresponding to a gap greater than or equal to X.
In some embodiments, the first HARQ process includes at least one of:
an HARQ process in collision;
an occupied HARQ process; or
an unavailable/non-selectable HARQ process.

In some embodiments, the first HARQ process or the unavailable HARQ process is an HARQ process corresponding to a gap less than or equal to X; and/or a non-first HARQ process or an available HARQ process is an HARQ process corresponding to a gap greater than X.

In some embodiments, the method further includes:

in a case where a CGT and/or a CGRT is configured, or a CGT and/or a CGRT is running, stopping the CGT and/or the CGRT under any one of the following conditions:
an HARQ process corresponding to a gap greater than X is selected for transmission of a current physical uplink shared channel (PUSCH) or a PUSCH is selected for transmission using an HARQ process corresponding to a gap greater than X; and/or
a PUSCH that is selected for transmission using an HARQ process with a running CGT and/or a running CGRT.

In some embodiments, X is a time interval or time threshold.

In some embodiments, X is a radio resource control (RRC)-configured, predefined, or preconfigured time interval or time threshold.

In some embodiments, X is a time for demodulation and/or rescheduling.

In some embodiments, the gap is a time interval between a current PUSCH and a previous PUSCH using a same HARQ process identifier (HPI).

In some embodiments, the current PUSCH is a CG PUSCH or a CG occasion; and
the previous PUSCH using the same HPI is a CG PUSCH or a CG occasion, or the previous PUSCH using the same HPI is a DG PUSCH.

In some embodiments, the gap includes:
an interval between a slot where an end symbol of a previous PUSCH is located and a slot where an end symbol of a current PUSCH is located; or
an interval between a time-domain symbol occupied by a previous PUSCH and a time-domain symbol occupied by a current PUSCH.

In some embodiments, a start point of the gap is a start or end time of a CG for a previous HARQ process with a same HPI, and an end point of the gap is a time prior to a start time or a start time of a CG for a next HARQ process with the same HPI.

In some embodiments, the first HARQ process or the unavailable HARQ process is an HARQ process for which a first timer has not expired or is running; and/or
a non-first HARQ process or an available HARQ process is an HARQ process for which a first timer has expired or is not running.

In some embodiments, the first timer is configured over RRC signaling.

In some embodiments, the first timer satisfies at least one of the following conditions:
the first timer is configured for a CG and/or an HARQ process;
the first timer is started in a case where a corresponding HARQ process is selected or transmitted, or in a case where a medium access control (MAC) protocol data unit (PDU) of a corresponding HARQ process is assembled/transmitted/delivered to a physical layer;
the first timer is a new timer; or
the first timer is stopped in a case where a CGT is not running or has expired.

In some embodiments, the method further includes:
a CGT and/or a CGRT is configured, or a CGT and/or a CGRT is running, stopping the stopping the CGT and/or the CGRT under any one of the following conditions:
an HARQ process with an expired first timer is selected for transmission of a current PUSCH or a PUSCH is selected for transmission using an HARQ process with an expired first timer; and/or
a PUSCH that is selected for transmission using an HARQ process with a running CGT and/or a running CGRT is present.

In some embodiments, the UE stops the CGT and/or the CGRT in a case where the HARQ process is selected, or in a case where the PUSCH is transmitted or transmission of the PUSCH starts, or in a case where a MAC PDU of an HARQ process is transmitted or delivered to a lower layer. In some embodiments, the UE starts the first timer in a case where the CGT and/or CGRT is stopped, or in a case where the HARQ process is selected, or in a case where the PUSCH is transmitted or transmission of the PUSCH starts, or in a case where a MAC PDU of the HARQ process is transmitted or delivered to a lower layer. In some embodiments, the UE starts the first timer in a case where the CGT and/or CGRT is started/restarted.

In some embodiments, the transmission or processing mode for a first resource, or the first action includes at least one of:
skipping an uplink grant, a CG occasion, or a CG PUSCH;
discarding or deprioritizing an uplink grant, a CG occasion, or a CG PUSCH;
discarding or deprioritizing an uplink grant, a CG occasion, or a CG PUSCH for an unavailable HARQ process or the first HARQ process;
not generating a corresponding new MAC PDU;
not invoking a multiplexing and assembly entity; or
not delivering a corresponding MAC PDU to a lower layer.

In some embodiments, the first action is performed under the following conditions:
a candidate HARQ process of an uplink resource includes the first HARQ process or an unavailable HARQ process; or
an uplink resource corresponds only to the first HARQ process or an unavailable HARQ process.

In some embodiments, a MAC layer performs the wireless transmission-related processing based on the selection or usage rule for the first HARQ process or based on the transmission or processing mode for the first resource; or
a MAC layer and a physical layer perform the wireless transmission-related processing based on the selection or usage rule for the first HARQ process or based on the transmission or processing mode for the first resource.

In summary, the terminal device performs wireless transmission-related processing based on a selection or usage rule for the first HARQ process that satisfies a collision condition or based on a transmission or processing mode for the first resource corresponding to the first HARQ process. In the above solution, the selection or usage of the HARQ process that satisfies the collision condition is taken into consideration during wireless transmission, which prevents transmission failures of MAC PDUs in HARQ processes that need to be used/reserved due to HARQ process collisions, such that transmission efficiency is improved.

FIG. 3 illustrates a flowchart of a method for processing wireless transmission according to some embodiments of the present disclosure. The method may be interactively applicable to a terminal device and a network device. The terminal device and network device may be the network device 110, the terminal device 120 (or the terminal device 130) in the network architecture illustrated in FIG. 1. As illustrated in FIG. 3, the method may include the following processes.

In process 301, a network device transmits configuration information or scheduling information to a terminal device; and the terminal device receives the configuration information or scheduling information.

In some embodiments, the configuration information or scheduling information is used for an uplink grant resource configuration, a CG resource configuration, uplink grant resource transmission, CG transmission, HARQ selection/usage, uplink resource usage/processing, or CG resource usage/processing.

In some embodiments, the uplink grant resource configuration includes at least one of:
one or more PUSCH occasions;
one or more scheduled PUSCH occasions, or one or more PUSCH occasions scheduled within a period;
a CG configuration, wherein one CG period includes one or more CG occasions; or
a selectable HARQ process.

In some embodiments, the selectable HARQ process is an HARQ process available for the PUSCH occasion or the CG configuration.

For example, the configuration information includes uplink grant resource configuration. In some embodiments, the uplink grant resource configuration includes the following cases:
I) The uplink grant resource configuration includes one or more PUSCH occasions.

In some embodiments, the uplink grant resource configuration includes a CG configuration. A CG period may include one or more CG occasions.

II) The uplink grant resource configuration includes an available HARQ process. In some embodiments, the uplink grant resource configuration includes the number of HARQ processes and/or an HARQ process offset.

In some embodiments, the uplink grant resource configuration includes a CG configuration. The configured HARQ process is the HARQ process available for the CG configuration.

In process 302, the network device transmits first indication information to a terminal device.

In some embodiments, the first indication information is used to indicate whether the terminal device enables the selection or usage rule of the first HARQ process; or the first indication information is used to instruct the terminal device to select an HARQ process for transmission of an uplink grant or a CG occasion based on the selection or usage rule of the first HARQ process.

In some embodiments, wherein the first indication information is used to instruct the terminal device to perform the first action or perform the transmission or processing mode for a first resource.

In some embodiments, the first indication information is configured using RRC.

In some embodiments, the first indication information is carried in a dedicated RRC message; or the first indication information is carried in ConfiguredGrantConfig (Configured Grant configuration information); or the first indication information is carried in RRC signaling other than ConfiguredGrantConfig.

In some embodiments, the first indication information is downlink control information (DCI) or a MAC control element (CE).

In some embodiments, the DCI is a CG activation/deactivation DCI.

For example, in one implementation, the first indication information may be configured using RRC. In some embodiments, the first indication information may be carried in the ConfiguredGrantConfig IE or in other RRC signaling.

For example, in one implementation, the first indication information may also be DCI or a MAC CE. In some embodiments, the DCI may be a CG activation/deactivation DCI.

In process 303, the terminal device performs wireless transmission-related processing based on a selection or usage rule for a first HARQ process or based on a transmission or processing mode for a first resource.

In some embodiments, the process that the terminal device performs wireless transmission-related processing based on the selection or usage rule for the first HARQ process or based on the transmission or processing mode for the first resource includes:
based on the selection or usage rule for the first HARQ process or based on the transmission or processing mode for the first resource, performing at least one of:
selecting or determining an HARQ process; or
performing a first action.

In summary, the terminal device performs wireless transmission-related processing based on a selection or usage rule for the first HARQ process that satisfies a collision condition or based on a transmission or processing mode for the first resource corresponding to the first HARQ process. In the above solution, the selection or usage of the HARQ process that satisfies the collision condition is taken into consideration during wireless transmission, which prevents transmission failures of MAC PDUs in HARQ processes that need to be used/reserved due to HARQ process collisions, such that transmission efficiency is improved.

Based on the embodiments illustrated in FIG. 3, in some embodiments, the process of selecting or determining the HARQ process includes:
selecting or determining an HARQ process for an uplink grant of the terminal device; or
selecting or determining at least one HARQ process for a plurality of uplink grants of the terminal device; or
selecting or determining an HARQ process corresponding to or available for a CG resource in an uplink grant; or
selecting or determining an HARQ process corresponding to or available for at least one CG occasion of a CG resource; or
selecting or determining an HARQ process corresponding to or available for at least one CG occasion within one period of a CG resource; or
selecting or determining an HARQ process corresponding to or available for each CG occasion within one period of a CG resource; or
selecting or determining an HARQ process corresponding to or available for each CG occasion of a CG resource; or
selecting or determining an HARQ process corresponding to or available for a current CG resource.

In some embodiments, the process of selecting or determining the HARQ process includes at least one of:
selecting or determining the HARQ process based on an HARQ calculation formula and/or terminal device implementation;
selecting or determining the HARQ process based on a priority of an LCH or a priority of the HARQ process;
selecting or determining the HARQ process based on whether a collision occurs, whether the HARQ process is the first HARQ process, or whether the HARQ process is an available HARQ process; or
selecting or determining the HARQ process based on first indication information.

In some embodiments, the process of selecting or determining the HARQ process includes:
selecting or determining the HARQ process in a first case, wherein the first case includes:
a plurality of candidate HARQ processes for an uplink grant of the terminal device, a plurality of candidate HARQ processes for at least one of a plurality of uplink grants of the terminal device, a plurality of candidate HARQ processes for a CG resource in an uplink grant, a plurality of candidate HARQ processes for at least one CG occasion of a CG resource, a plurality of candidate HARQ processes for at least one CG occasion within one period of a CG resource, a plurality of candidate HARQ processes for each CG occasion within one period of a CG resource, or a plurality of candidate HARQ processes for each CG occasion of a CG resource being present; or
a candidate HARQ process for an uplink grant of the terminal device, a candidate HARQ process for at least one of a plurality of uplink grants of the terminal device, a candidate HARQ process for a CG resource in the uplink grant, a candidate HARQ process for at least one CG occasion of a CG resource, a candidate HARQ process for at least one CG occasion within one period of a CG resource, a candidate HARQ process for each CG occasion within one period of a CG resource, or a candidate HARQ process for each CG occasion of a CG resource being selected by the terminal device.

In some embodiments, the process of selecting or determining the HARQ process includes:
selecting or determining the HARQ process in a second case, wherein the second case includes:
a candidate HARQ process for a CG resource in an uplink grant of the terminal device, a candidate HARQ process for at least one CG occasion of a CG resource, a candidate HARQ process for at least one CG occasion within one period of a CG resource, a candidate HARQ process for each CG occasion within one period of a CG resource, or a candidate HARQ process for each CG occasion of a CG resource being determined by the terminal device based on a formula.

In some embodiments, the process of selecting or determining the HARQ process includes:
selecting or determining whether to use the first HARQ process; or
determining whether to deprioritize the first HARQ process; or
determining whether to prioritize an HARQ process other than the first HARQ process; or
determining whether a candidate HARQ process is an available HARQ process; or
determining whether a candidate HARQ process is the first HARQ process; or
determining whether to use an HARQ process for which a CGT or a CGRT has not expired.

In some embodiments, the available HARQ process includes at least one of:
an HARQ process for which the CGT and/or the CGRT has not expired;
an HARQ process for which a first timer has expired or is not running; or
an HARQ process corresponding to a gap greater than or equal to X.
In some embodiments, the first HARQ process includes at least one of:
an HARQ process in collision;
an occupied HARQ process; or
an unavailable/non-selectable HARQ process.

In some embodiments, the first HARQ process or the unavailable HARQ process is an HARQ process corresponding to a gap less than or equal to X; and/or a non-first HARQ process or an available HARQ process is an HARQ process corresponding to a gap greater than X.

In some embodiments, the method further includes:
in a case where a CGT and/or a CGRT is configured, or a CGT and/or a CGRT is running, stopping the CGT and/or the CGRT under the following conditions:
an HARQ process corresponding to a gap greater than X is selected for transmission of a current PUSCH or a PUSCH is selected for transmission using an HARQ process corresponding to a gap greater than X; and/or
a PUSCH that is selected for transmission using an HARQ process with a running CGT and/or a running CGRT is present.

In some embodiments, the UE stops the CGT and/or the CGRT in a case where the HARQ process is selected, or in a case where the PUSCH is transmitted or transmission of the PUSCH starts, or in a case where a MAC PDU of an HARQ process is transmitted or delivered to a lower layer. In some embodiments, in a case where the CGT and/or CGRT is stopped, or in a case where the HARQ process is selected, or in a case where the PUSCH is transmitted or transmission of the PUSCH starts, or in a case where a MAC PDU of the HARQ process is transmitted or delivered to a lower layer, the UE counts or recounts the gap, or initializes the gap count, or clears the gap to zero.

In some embodiments, X is a time interval or time threshold.

In some embodiments, X is an RRC-configured, predefined, or preconfigured time interval or time threshold.

In some embodiments, X is a time for demodulation and/or rescheduling.

In some embodiments, the gap is a time interval between a current PUSCH and a previous PUSCH using a same HPI.

In some embodiments, the current PUSCH is a CG PUSCH or a CG occasion; and
the previous PUSCH using the same HPI is a CG PUSCH or a CG occasion, or the previous PUSCH using the same HPI is a DG PUSCH.

In some embodiments, the gap includes:
an interval between a slot where an end symbol of a previous PUSCH is located and a slot where an end symbol of a current PUSCH is located; or
an interval between a time-domain symbol occupied by a previous PUSCH and a time-domain symbol occupied by a current PUSCH.

In some embodiments, a start point of the gap is a start or end time of a CG for a previous HARQ process with a same HPI, and an end point of the gap is a time prior to a start time or a start time of a CG for a next HARQ process with the same HPI.

In some embodiments, the first HARQ process or the unavailable HARQ process is an HARQ process for which a first timer has not expired or is running; and/or a non-first HARQ process or an available HARQ process is an HARQ process for which a first timer has expired or is not running.

In some embodiments, the first timer is configured over RRC signaling.

In some embodiments, the first timer satisfies at least one of the following conditions:
the first timer is configured for a CG and/or an HARQ process;
the first timer is started in a case where a corresponding HARQ process is selected or transmitted, or in a case where a MAC PDU of a corresponding HARQ process is assembled/transmitted/delivered to a physical layer;
the first timer is a new timer; or
the first timer is stopped in a case where a CGT is not running or has expired.

In some embodiments, the method further includes:
in a case where a CGT and/or a CGRT is configured, or a CGT and/or a CGRT is running, stopping the CGT and/or the CGRT under the following conditions:
an HARQ process with an expired first timer is selected for transmission of a current PUSCH or in a case where a PUSCH is selected for transmission using an HARQ process with an expired first timer; and/or
a PUSCH that is selected for transmission using an HARQ process with a running CGT and/or a running CGRT for transmission is present.

In some embodiments, the UE stops the CGT and/or the CGRT in a case where the HARQ process is selected, or in a case where the PUSCH is transmitted or transmission of the PUSCH starts, or in a case where a MAC PDU of an HARQ process is transmitted or delivered to a lower layer. In some embodiments, the UE starts the first timer in a case where the CGT and/or CGRT is stopped, or in a case where the HARQ process is selected, or in a case where the PUSCH is transmitted or transmission of the PUSCH starts, or in a case where a MAC PDU of the HARQ process is transmitted or delivered to a lower layer. In some embodiments, the UE starts/restarts the CGT and/or CGRT in a case where the first timer is started.

In some embodiments, the MAC layer performs the CG transmission, HARQ process selection, the usage/processing of CG resource is performed by the MAC layer and the physical layer. Alternatively, the CG transmission, HARQ process selection, and the usage/processing of CG resource is performed by the MAC layer and the physical layer.

For example, the process of selecting or determining the HARQ process, or selecting or determining the HARQ process for the uplink grant, or selecting or determining the HARQ process corresponding/available to the CG resource, or selecting or determining the HARQ process corresponding/available to each CG occasion of the CG resource, or selecting or determining the HARQ process corresponding/available to the current CG resource, may include at least one of:
I) the UE selects or determines the HARQ process based on an HARQ calculation formula and/or UE implementation;
II) the UE selects or determines the HARQ process based on a priority of an LCH or a priority of the HARQ process; or
III) the UE selects or determines the HARQ process based on first indication information.

In some embodiments, the above I) to III) may be used alone, or at least two of the I) to III) may be used in combination.

In some embodiments, in a case where a plurality of candidate HARQ processes for the uplink grant or the CG resource (or CG occasion) are present, or in a case where the candidate HARQ process for the uplink grant or the CG resource (or CG occasion) is selected by the UE, then the UE selects or determines whether to use a first HARQ process, or determines whether to deprioritize the first HARQ process, or determines whether to prioritize an HARQ process other than the first HARQ process, or determines whether the candidate HARQ process is an available HARQ process, or the UE determines whether to use an HARQ process for which the CGT/CGRT has not expired. This further includes the following items 1) to 6).
1) In some embodiments, based on the indication of the first indication information, the UE selects or determines whether to use the first HARQ process, or determines whether to deprioritize the first HARQ process, or determines whether to prioritize an HARQ process other than the first HARQ process, or determines whether the candidate HARQ process is an available HARQ process, or the UE determines whether to use an HARQ process for which the CGT/CGRT has not expired.
2) In some embodiments, the determination or selection of the HARQ process is performed by the MAC layer or the physical layer.
3) In some embodiments, even if the CGT and/or CGRT of the HARQ process has not expired, the HARQ process may still be considered available for the current PUSCH. The available HARQ process is an HARQ process for which the first timer has expired or is not running, or is an HARQ process corresponding to a gap greater than or equal to X. In some embodiments, the duration of the first timer may be shorter than that of the CGT.
4) In some embodiments, the first HARQ process includes an HARQ process in collision, an occupied HARQ process; or an unavailable/non-selectable HARQ process.
5) In some embodiments, the first HARQ process or the unavailable HARQ process is an HARQ process corresponding to a gap less than or equal to X. In some embodiments, an HARQ process corresponding to a gap greater than X is a non-first HARQ process or an available HARQ process. In some embodiments, in a case where a CGT and/or a CGRT is configured, or a CGT and/or a CGRT is running, the CGT and/or the CGRT may be stopped under the following condition: an HARQ process corresponding to a gap greater than X is selected for transmission of a current PUSCH, or in a case where a PUSCH is selected for transmission using the HARQ process corresponding to the gap greater than X. In some embodiments, the UE stops the CGT and/or the CGRT in a case where the HARQ process is selected, or in a case where the PUSCH is transmitted or transmission of the PUSCH starts, or in a case where a MAC PDU of an HARQ process is transmitted or delivered to a lower layer. In some embodiments, in a case where the CGT and/or CGRT is stopped, or in a case where the HARQ process is selected, or in a case where the PUSCH is transmitted or transmission of the PUSCH starts, or in a case where a MAC PDU of the HARQ process is transmitted or delivered to a lower layer, the UE counts or recounts the gap, or initializes the gap count, or clears the gap to zero.
6) In some embodiments, the maintenance or calculation of the gap may be performed by the MAC layer or the physical layer. In some embodiments, the determination of the relationship between the gap and X may be performed by the MAC layer or the physical layer. In some embodiments, whether an HARQ process is available or whether an HARQ process is the first HARQ process may be determined by the MAC layer or the physical layer. In some embodiments, the maintenance and/or related determination of the first timer may be performed by the physical layer and/or the MAC layer.

In some embodiments, X is a first time, wherein the first time is a time interval or a time threshold. In some embodiments, the first time is RRC-configured, predefined, or preconfigured. In some embodiments, the first time is a time for demodulation and/or rescheduling.

In some embodiments, the gap is a time interval between a current PUSCH and a previous PUSCH using a same HPI. In some embodiments, the current PUSCH may be a CG PUSCH or a CG occasion. In some embodiments, the previous PUSCH using the same HPI is a CG PUSCH or a CG occasion (in this case, in a case where the previous PUSCH is a DG, the HARQ process corresponding to the HPI is available, or the HARQ process corresponding to the HPI may be used for the current PUSCH, or the HARQ process corresponding to the HPI may be used for transmitting a new MAC PDU, or the MAC PDU in the HARQ process corresponding to the HPI may be overwritten).

In some embodiments, the gap includes an interval between a slot where an end symbol of a previous PUSCH (e.g., a second PUSCH) is located and a slot where an end symbol of a current PUSCH (e.g., a first PUSCH) is located. For example, the end symbol of the second PUSCH is in slot n, and the slot where the end symbol of the first PUSCH is located is no earlier than slot n+x, wherein x is a predefined value, then the HPI may be used by the first PUSCH. For example, the end symbol of the first PUSCH is in slot m, and the slot where the end symbol of the second PUSCH is located is no later than slot m-x, wherein x is a predefined value, then the HPI may be used by the first PUSCH. For example, the end symbol of the first PUSCH is in slot m, and the second PUSCH is not present within the x slots before the slot m (or the UE is not expected to transmit the second PUSCH within the x slots before the slot m), wherein x is a predefined value, then the HPI may be used by the first PUSCH. For example, the end symbol of the second PUSCH is in slot n, and the UE does not transmit the first PUSCH within the x slots after the slot n (or the UE is not expected to transmit the first PUSCH within the x slots after the slot n), wherein x is a predefined value, and then the HPI may be used by the first PUSCH.

In some embodiments, the gap is an interval between a time-domain symbol occupied by a previous PUSCH (e.g., a second PUSCH) and a time-domain symbol occupied by a current PUSCH (e.g., a first PUSCH). That is, the gap is an interval between the start or end position (symbol P) of the second PUSCH and the start or end position (symbol Q) of the first PUSCH, wherein x is a predefined value. For example, the symbol Q is no earlier than the x^{th} symbol after the symbol P, the HPI may be used by the first PUSCH. For example, the symbol P is no later than the x^{th} symbol before the symbol Q, the HPI may be used by the first PUSCH. For example, the second PUSCH is not present within the x symbols before the symbol Q (or the terminal is not expected to transmit the second PUSCH within the x symbols before the symbol Q), the HPI may be used by the first PUSCH. For example, the terminal does not transmit the first PUSCH within the x symbols after the symbol P (or the terminal is not expected to transmit the first PUSCH within the x symbols after the symbol P), the HPI may be used by the first PUSCH.

Alternatively, a start point of the gap is a start or end time of a CG for a previous HARQ process with a same HPI, and an end point of the gap is a time prior to a start time or a start time of a CG for a next HARQ process with the same HPI.

Alternatively, the first HARQ process or the unavailable HARQ process is an HARQ process for which a first timer has not expired or is running. The non-first HARQ process or an available HARQ process is an HARQ process for which a first timer has expired or is not running. The first timer is configured over network RRC signaling. The configuration of the first timer at least includes a duration of the first timer. The first timer is configured for a CG and/or an HARQ process. For the first timer corresponding to a specific HARQ process, the first timer starts in a case where the HARQ process is selected or transmitted, or a MAC PDU of the HARQ process is assembled/transmitted/delivered to the physical layer. The first timer is a new timer. The first timer is stopped in a case where the CGT has expired.

In some embodiments, the physical layer determines whether an HARQ process is unavailable or is the first process. For example, the physical layer indicates this information (i.e., whether an HARQ process is unavailable or is the first process) to the MAC layer. Alternatively, the physical layer indicates available HARQ process or non-first HARQ process to the MAC layer. Alternatively, the physical layer notifies the MAC layer of candidate HARQ process other than the unavailable HARQ process or the first HARQ process.

In a case where only one candidate HARQ process for the CG resource or CG occasion is present, or the candidate HARQ process for the CG resource or CG occasion is calculated based on a formula, then the UE may determine, based on the first indication information, whether to use the first HARQ process or whether the candidate HARQ process is an available HARQ process. This further includes the following items 1) to 3).
1) In some embodiments, based on the indication of the first indication information, the UE selects or determines whether to use the first HARQ process, or determines whether to deprioritize the first HARQ process, or determines whether to prioritize an HARQ process other than the first HARQ process, or determines whether the candidate HARQ process is an available HARQ process.
2) In some embodiments, the first HARQ process includes an HARQ process in collision, an occupied HARQ process, or an unavailable/non-selectable HARQ process.
3) In some embodiments, the first HARQ process or the unavailable HARQ process is an HARQ process corresponding to a gap less than or equal to X. In some embodiments, an HARQ process corresponding to a gap greater than X is a non-first HARQ process or an available HARQ process.

In some embodiments, X is a first time, wherein the first time is a time interval or a time threshold. In some embodiments, the first time is RRC-configured, predefined, or pre-configured. In some embodiments, the first time is a time for demodulation and/or rescheduling.

In some embodiments, the gap is a time interval between a current PUSCH and a previous PUSCH using a same HPI. In some embodiments, the current PUSCH may be a CG PUSCH or a CG occasion. In some embodiments, the previous PUSCH using the same HPI is a CG PUSCH or a CG occasion (in a case where the previous PUSCH is a DG, the HARQ process corresponding to the HPI is available, or the HARQ process corresponding to the HPI may be used for the current PUSCH, or the HARQ process corresponding to the HPI may be used for transmitting a new MAC PDU, or the MAC PDU in the HARQ process corresponding to the HPI may be overwritten).

Alternatively, a start point of the gap is a start or end time of a CG for a previous HARQ process with a same HPI, and an end point of the gap is a time prior to a start time or a start time of a CG for a next HARQ process with the same HPI.

Alternatively, the first HARQ process or the unavailable HARQ process is an HARQ process for which a first timer has not expired or is running. The non-first HARQ process or an available HARQ process is an HARQ process for which a first timer has expired or is not running. The first timer is configured over network RRC signaling. The configuration of the first timer at least includes a duration of the first timer. The first timer is configured for a CG and/or an HARQ process. For the first timer corresponding to a specific HARQ process, the first timer starts in a case where the HARQ process is selected or transmitted, or a MAC PDU of the HARQ process is assembled/transmitted/delivered to the physical layer. The first timer is a new timer. The first timer is stopped in a case where the CGT has expired. In a case where a CGT and/or a CGRT is configured, or a CGT and/or a CGRT is running, the CGT and/or the CGRT may be stopped under the following condition: an HARQ process corresponding to a first timer expired or not running is selected for transmission of a current PUSCH, or a PUSCH is selected for transmission using the HARQ process corresponding to the first timer that has expired or is not running. In some embodiments, the UE stops the CGT and/or the CGRT in a case where the HARQ process is selected, or in a case where the PUSCH is transmitted or transmission of the PUSCH starts, or in a case where a MAC PDU of an HARQ process is transmitted or delivered to a lower layer. In some embodiments, the UE starts the first timer in a case where the CGT and/or CGRT is stopped, or in a case where the HARQ process is selected, or in a case where the PUSCH is transmitted or transmission of the PUSCH starts, or in a case where a MAC PDU of the HARQ process is transmitted or delivered to a lower layer. In some embodiments, the UE starts/restarts the CGT and/or CGRT in a case where the first timer is started.

Based on the embodiments illustrated in FIG. 3, in some embodiments, the transmission or processing mode for a first resource, or the first action, includes at least one of:
skipping an uplink grant, a CG occasion, or a CG PUSCH;
discarding or deprioritizing an uplink grant, a CG occasion, or a CG PUSCH;
discarding or deprioritizing an uplink grant, a CG occasion, or a CG PUSCH for an unavailable HARQ process or the first HARQ process;
not generating a corresponding new MAC PDU;
not invoking a multiplexing and assembly entity; or
not delivering a corresponding MAC PDU to a lower layer.
In some embodiments, the first action is performed under the following conditions:
a candidate HARQ process of an uplink resource includes the first HARQ process or an unavailable HARQ process; or
an uplink resource corresponds only to the first HARQ process or an unavailable HARQ process.

For example, UE performs the first action, or UE performs the first action based on the first indication information.

For example, the first action includes at least one of: skipping the uplink grant, the CG occasion, or the CG PUSCH; deprioritizing the uplink grant, the CG occasion, or the CG PUSCH; deprioritizing the uplink grant, the CG occasion, or the CG PUSCH for the unavailable HARQ process or the first HARQ process; not generating a corresponding new MAC PDU; not invoking a multiplexing and assembly entity; or not delivering a corresponding MAC PDU to a lower layer (e.g., the physical layer). The first action is performed under the following condition: the first action is performed at the MAC layer, for the first HARQ process or the unavailable HARQ process, the candidate HARQ process of an uplink resource includes the first HARQ process or the unavailable HARQ process. In some embodiments, the MAC layer performs the first action based on information indicated by the physical layer.

For example, the first action includes at least one of: skipping the uplink grant, the CG occasion, or the CG PUSCH; deprioritizing the uplink grant, the CG occasion, or the CG PUSCH; deprioritizing the uplink resource corresponding to the unavailable HARQ process or the first HARQ process; retaining the existing HARQ PDU in the unavailable HARQ process or the first HARQ process; or ignoring or discarding a new/newly received MAC PDU for the unavailable HARQ process or the first HARQ process. The first action is performed under the following condition: the first action is performed at the physical layer, and for the first HARQ process or the unavailable HARQ process, the candidate HARQ process of an uplink resource includes the first HARQ process or the unavailable HARQ process.

For details, reference may be made to the following items I) to V).
I) For example, in a case where the first timer of an HARQ process is running or has not expired, or the first timer of an HARQ process for a CG occasion is running or has not expired, then this HARQ process is considered the unavailable HARQ process or the first HARQ process.
II) For example, in a case where the gap corresponding to an HARQ process is less than X, or for a CG occasion, the gap corresponding to an HARQ process for a CG occasion is less than X, then this HARQ process is considered the unavailable HARQ process or the first HARQ process.
III) For example, for an HARQ process corresponding to a gap greater than X or an HARQ process corresponding to a first timer expired or not running, in a case where a CGT and/or a CGRT is configured, or a CGT and/or a CGRT is running, the CGT and/or the CGRT may be stopped under the following condition: the HARQ process is selected for transmission of a current PUSCH, or a PUSCH is selected for transmission using the HARQ process corresponding to the gap greater than X.

In some embodiments, the UE stops the CGT and/or the CGRT in a case where the HARQ process is selected, or in a case where the PUSCH is transmitted or transmission of the PUSCH starts, or in a case where a MAC PDU of an HARQ process is transmitted or delivered to a lower layer. In some embodiments, the UE starts a first timer in a case where the CGT and/or CGRT is stopped, or in a case where the HARQ process is selected, or in a case where the PUSCH is transmitted or transmission of the PUSCH starts, or in a case where a MAC PDU of the HARQ process is transmitted or delivered to a lower layer. In some embodiments, the UE starts/restarts the CGT and/or CGRT in a case where the first timer is started. In some embodiments, in a case where the CGT and/or CGRT is stopped, or in a case where the HARQ process is selected, or in a case where the PUSCH is transmitted or transmission of the PUSCH starts, or in a case where a MAC PDU of the HARQ process is transmitted or delivered to a lower layer, the UE counts or recounts the gap, or initializes the gap count, or clears the gap to zero.
IV) For example, the MAC entity deprioritizes the first HARQ process or the unavailable HARQ process, or does not select the first HARQ process or an unavailable HARQ process for the corresponding or current CG occasion transmission.

V) For example, the MAC entity does not generate a new MAC PDU for the first HARQ process or the unavailable HARQ process, or skips the first HARQ process or the unavailable HARQ process, or does not deliver the MAC PDU of the first HARQ process or the unavailable HARQ process to a lower layer, or does not use the CG resource of the first HARQ process or the unavailable HARQ process, or deprioritizes the uplink resource.

For example, the physical layer deprioritizes the first HARQ process or the unavailable HARQ process, or does not select the first HARQ process or an unavailable HARQ process for the corresponding or current CG occasion transmission. The physical layer provides the information of the HARQ process to the MAC layer.

For example, the MAC entity does not generate a new MAC PDU for the first HARQ process or the unavailable HARQ process, or skips the first HARQ process or the unavailable HARQ process, or does not deliver the MAC PDU of the first HARQ process or the unavailable HARQ process to a lower layer, or does not use the CG resource of the first HARQ process or the unavailable HARQ process, or assigns a low priority to the CG resource of the HARQ process, or does not use the CG resource of the HARQ process. The MAC layer performs the action based on the information of the HARQ process provided by the physical layer.

For example, the physical layer deprioritizes the first HARQ process or the unavailable HARQ process, or does not select the first HARQ process or an unavailable HARQ process for the corresponding or current CG occasion transmission. Furthermore, the physical layer skips/discards a new MAC PDU for the HARQ process, or retains the original MAC PDU, or skips the CG resource corresponding to the HARQ process, or assigns a low priority to the CG resource of the HARQ process.

The solutions according to the embodiments of the present disclosure provide a method for selecting or using HARQ processes or processing CG resources in a case where HARQ process collisions occur or HARQ processes are occupied. In this way, the problem of HARQ process collisions is solved and flushing of MAC PDUs in HARQ processes that still need to be used or reserved is prevented.

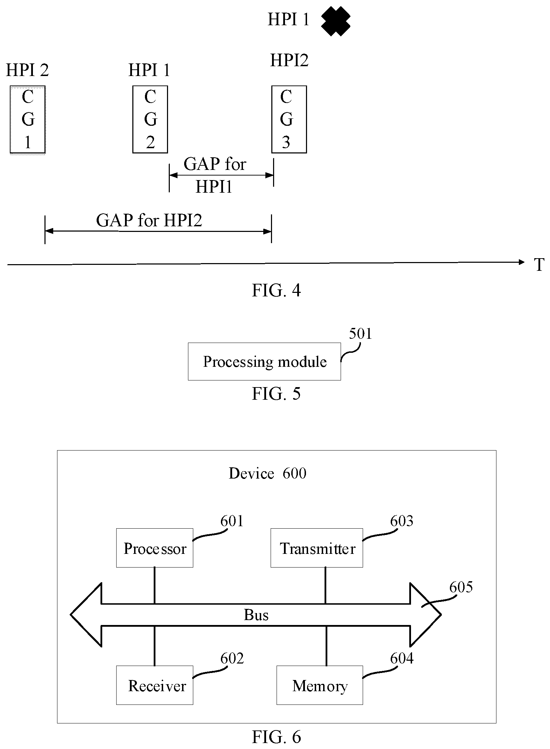

For example, FIG. 4 illustrates a schematic diagram of wireless transmission according to some embodiments of the present disclosure. As illustrated in FIG. 4, HPI1 and HPI2 are associated with different gaps. The terminal device transmits HPI2 in CG1, and transmits HPI1 in CG2. In CG3, HPI1 and HPI2 require simultaneous transmission, resulting in HARQ collision s. According to the method described in the above embodiments, the terminal device may transmit HPI2 instead of HPI1, thereby avoiding transmission failure of the MAC PDU corresponding to HPI1.

Based on the embodiments illustrated in FIG. 2 and or FIG. 3, using a scenario where the MAC layer performs the wireless transmission-related processing based on a selection or usage rule for a first HARQ process or based on a transmission or processing mode for a first resource as an example, the above solution may be implemented as follows:

In S1, the base station transmits configuration information to the UE. The configuration information is used for CG transmission, HARQ selection/usage, CG resource usage/processing. In some embodiments, the configuration information includes at least one of the following items.

a) The configuration information includes uplink grant resource configuration. In some embodiments:
i) The uplink grant resource configuration includes one or more PUSCH occasions.

In some embodiments, the uplink grant resource configuration includes CG configuration. A CG period may include one or more CG occasions.

ii) The uplink grant resource configuration includes available HARQ processes. In some embodiments, the uplink grant resource configuration includes the HARQ process number and/or HARQ process offset.

In some embodiments, the uplink grant resource configuration includes CG configuration. The configured HARQ process is the HARQ process available for CG configuration.

b) The network provides the first indication information to the UE, which is used to indicate whether to use the selection/usage rule for the first HARQ process, or select the HARQ process for transmission using a CG occasion (or current CG occasion) based on the selection/usage rule for the first HARQ process. Additionally or alternatively, the UE performs the first action based on the first indication information.

i) In some embodiments, the first indication information may be RRC-configured. In some embodiments, the first indication information may be carried in ConfiguredGrantConfig or other RRC signaling.

ii) In some embodiments, the first indication information may also be DCI or MAC CE. In some embodiments, the DCI may be CG activation/deactivation DCI.

In S2, the UE performs at least one of CG transmission, HARQ process selection, or CG resource usage/processing based on the network configuration information,. Specifically, this may include at least one of:
a) The UE selects or determines the HARQ process, or selects or determines the HARQ process for the uplink grant, or selects or determines the HARQ process corresponding/available to the CG resource, or selects or determines the HARQ process corresponding/available to each CG occasion of the CG resource, or selects or determines the HARQ process corresponding/available to the current CG resource. This may include at least one of:
   i) The UE selects or determines the HARQ process based on an HARQ calculation formula and/or UE implementation;
   ii) The UE selects or determines the HARQ process based on a priority of an LCH or a priority of the HARQ process; or
   iii) The UE selects or determines the HARQ process based on first indication information.

The items i) to iii) may be used alone, or at least two of the I) to III) may be used in combination.

In a case where a plurality of candidate HARQ processes for the uplink grant or the CG resource (or CG occasion) are present, or in a case where the candidate HARQ process for the uplink grant or the CG resource (or CG occasion) is selected by the UE, then the UE selects or determines whether to use a first HARQ process, or determines whether to deprioritize the first HARQ process, or determines whether to prioritize an HARQ process other than the first HARQ process, or determines whether the candidate HARQ process is an available HARQ process, or the UE determines whether to use an HARQ process for which the CGT/CGRT has not expired.
1) Based on the indication of the first indication information, the UE selects or determines whether to use the first HARQ process, or determines whether to deprioritize the first HARQ process, or determines whether to prioritize an HARQ process other than the first HARQ process, or determines whether the candidate HARQ process is an available HARQ process, or the UE determines whether to use an HARQ process for which the CGT/CGRT has not expired.
2) In some embodiments, the operation or determination is performed by the MAC layer.
3) In some embodiments, even if the CGT and/or CGRT of the HARQ process has not expired, the HARQ process may still be considered available for the current PUSCH. The available HARQ process is an HARQ process for which the first timer has expired or is not running, or is an HARQ process corresponding to a gap greater than or equal to X. In some embodiments, the duration of the first timer may be shorter than that of the CGT.
4) In some embodiments, the first HARQ process includes an HARQ process in collision, an occupied HARQ process; or an unavailable/non-selectable HARQ process.
5) In some embodiments, the first HARQ process or the unavailable HARQ process is an HARQ process corresponding to a gap less than or equal to X. In some embodiments, an HARQ process corresponding to a gap greater than X is a non-first HARQ process or an available HARQ process. In some embodiments, in a case where a CGT and/or a CGRT is configured, or a CGT and/or a CGRT is running, the CGT and/or the CGRT may be stopped under the following condition: an HARQ process corresponding to a gap greater than X is selected for transmission of a current PUSCH, or a current PUSCH is selected for transmission using the HARQ process corresponding to the gap greater than X.

In some embodiments, X is a first time, wherein the first time is a time interval or a time threshold. In some embodiments, the first time is RRC-configured, predefined, or pre-configured. In some embodiments, the first time is a time for demodulation and/or rescheduling.

In some embodiments, the gap is a time interval between a current PUSCH and a previous PUSCH using a same HPI. In some embodiments, the current PUSCH may be a CG PUSCH or a CG occasion. In some embodiments, the previous PUSCH using the same HPI is a CG PUSCH or a CG occasion (in this case, in a case where the previous PUSCH is a DG, the HARQ process corresponding to the HPI is available, or the HARQ process corresponding to the HPI may be used for the current PUSCH, or the HARQ process corresponding to the HPI may be used for transmitting a new MAC PDU, or the MAC PDU in the HARQ process corresponding to the HPI may be overwritten).

In some embodiments, the gap includes an interval between a slot where an end symbol of a previous PUSCH (e.g., a second PUSCH) is located and a slot where an end symbol of a current PUSCH (e.g., a first PUSCH) is located. For example, the end symbol of the second PUSCH is in slot n, and the slot where the end symbol of the first PUSCH is located is no earlier than slot n+x, wherein x is a predefined value, then the HPI may be used by the first PUSCH. For example, the end symbol of the first PUSCH is in slot m, and the slot where the end symbol of the second PUSCH is located is no later than slot m-x, wherein x is a predefined value, then the HPI may be used by the first PUSCH. For example, the end symbol of the first PUSCH is in slot m, and the second PUSCH is not present within the x slots before the slot m (or the UE is not expected to transmit the second PUSCH within the x slots before the slot m), wherein x is a predefined value, then the HPI may be used by the first PUSCH. For example, the end symbol of the second PUSCH is in slot n, and the UE does not transmit the first PUSCH within the x slots after the slot n (or the UE is not expected to transmit the first PUSCH within the x slots after the slot n), wherein x is a predefined value, then the HPI may be used by the first PUSCH.

In some embodiments, the gap is an interval between a time-domain symbol occupied by a previous PUSCH (e.g., a second PUSCH) and a time-domain symbol occupied by a current PUSCH (e.g., a first PUSCH). That is, the gap is an interval between the start or end position (symbol P) of the second PUSCH and the start or end position (symbol Q) of the first PUSCH, wherein x is a predefined value. For example, the symbol Q is no earlier than the x^{th} symbol after the symbol P, the HPI may be used by the first PUSCH. For example, the symbol P is no later than the x^{th} symbol before the symbol Q, the HPI may be used by the first PUSCH. For example, the second PUSCH is not present within the x symbols before the symbol Q (or the terminal is not expected to transmit the second PUSCH within the x symbols before the symbol Q), the HPI may be used by the first PUSCH. For example, the terminal does not transmit the first PUSCH within the x symbols after the symbol P (or the terminal is not expected to transmit the first PUSCH within the x symbols after the symbol P), the HPI may be used by the first PUSCH.

Alternatively, a start point of the gap is a start or end time of a CG for a previous HARQ process with a same HPI, and an end point of the gap is a time prior to a start time or a start time of a CG for a next HARQ process with the same HPI.

Alternatively, the first HARQ process or the unavailable HARQ process is an HARQ process for which a first timer has not expired or is running. The non-first HARQ process or an available HARQ process is an HARQ process for which a first timer has expired or is not running. The first timer is configured over network RRC signaling. The configuration of the first timer at least includes a duration of the first timer. The first timer is configured for a CG and/or an HARQ process. For the first timer corresponding to a specific HARQ process, the first timer starts in a case where the HARQ process is selected or transmitted, or a MAC PDU of the HARQ process is assembled/transmitted/delivered to the physical layer. The first timer is a new timer. The first timer is stopped in a case where the CGT has expired.

In a case where only one candidate HARQ process for the CG resource or CG occasion is present, or the candidate HARQ process for the CG resource or CG occasion is calculated based on a formula, then the UE may determine, based on the first indication information, whether to use the first HARQ process or whether the candidate HARQ process is an available HARQ process.
1) Based on the indication of the first indication information, the UE selects or determines whether to use the first HARQ process, or determines whether to deprioritize the first HARQ process, or determines whether to prioritize an HARQ process other than the first HARQ process, or determines whether the candidate HARQ process is an available HARQ process.
2) In some embodiments, the first HARQ process includes an HARQ process in collision, an occupied HARQ process; or an unavailable/non-selectable HARQ process.
3) In some embodiments, the first HARQ process or the unavailable HARQ process is an HARQ process corresponding to a gap less than or equal to X. In some embodiments, an HARQ process corresponding to a gap greater than X is a non-first HARQ process or an available HARQ process.

In some embodiments, X is a first time, wherein the first time is a time interval or a time threshold. In some embodiments, the first time is RRC-configured, predefined, or pre-configured. In some embodiments, the first time is a time for demodulation and/or rescheduling.

In some embodiments, the gap is a time interval between a current PUSCH and a previous PUSCH using a same HPI. In some embodiments, the current PUSCH may be a CG PUSCH or a CG occasion. In some embodiments, the previous PUSCH using the same HPI is a CG PUSCH or a CG occasion (in this case, in a case where the previous PUSCH is a DG, the HARQ process corresponding to the HPI is available, or the HARQ process corresponding to the HPI may be used for the current PUSCH, or the HARQ process corresponding to the HPI may be used for transmitting a new MAC PDU, or the MAC PDU in the HARQ process corresponding to the HPI may be overwritten).

Alternatively, a start point of the gap is a start or end time of a CG for a previous HARQ process with a same HPI, and an end point of the gap is a time prior to a start time or a start time of a CG for a next HARQ process with the same HPI.

Alternatively, the first HARQ process or the unavailable HARQ process is an HARQ process for which a first timer has not expired or is running. The non-first HARQ process or an available HARQ process is an HARQ process for which a first timer has expired or is not running. The first timer is configured over network RRC signaling. The configuration of the first timer at least includes a duration of the first timer. The first timer is configured for a CG and/or an HARQ process. For the first timer corresponding to a specific HARQ process, the first timer starts in a case where the HARQ process is selected or transmitted, or a MAC PDU of the HARQ process is assembled/transmitted/delivered to the physical layer. The first timer is a new timer. The first timer is stopped in a case where the CGT has expired. In a case where a CGT and/or a CGRT is configured, or a CGT and/or a CGRT is running, the CGT and/or the CGRT may be stopped under the following condition: an HARQ process corresponding to a first timer expired or not running is selected for transmission of a current PUSCH, or a current PUSCH is selected for transmission using the HARQ process corresponding to the first timer expired or not running.

b) The UE performs the first action, or UE performs the first action based on the first indication information. The first action includes at least one of: skipping the uplink grant, the CG occasion, or the CG PUSCH; deprioritizing the uplink grant, the CG occasion, or the CG PUSCH; deprioritizing the uplink grant, the CG occasion, or the CG PUSCH for the unavailable HARQ process or the first HARQ process; not generating a corresponding new MAC PDU; not invoking a multiplexing and assembly entity; or not delivering a corresponding MAC PDU to a lower layer (e.g., the physical layer). The first action is performed under the following condition: the first action is performed at the MAC layer, for the first HARQ process or the unavailable HARQ process, the candidate HARQ process of an uplink resource includes the first HARQ process or the unavailable HARQ process.
i) For example, in a case where the first timer of an HARQ process is running or has not expired, or the first timer of an HARQ process for a CG occasion is running or has not expired, then this HARQ process is considered the unavailable HARQ process or the first HARQ process.
ii) For example, in a case where the gap corresponding to an HARQ process is less than X, or for a CG occasion, the gap corresponding to an HARQ process for a CG occasion is less than X, then this HARQ process is considered the unavailable HARQ process or the first HARQ process.
iii) For example, for an HARQ process corresponding to a gap greater than X or an HARQ process corresponding to a first timer expired or not running, in a case where a CGT and/or a CGRT is configured, or a CGT and/or a CGRT is running, the CGT and/or the CGRT may be stopped under the following condition: the HARQ process is selected for transmission of a current PUSCH, or a current PUSCH is selected for transmission using the HARQ process corresponding to the gap greater than X.
iv) For example, the MAC entity deprioritizes the first HARQ process or the unavailable HARQ process, or does not select the first HARQ process or an unavailable HARQ process for the corresponding or current CG occasion transmission.
v) For example, the MAC entity does not generate a new MAC PDU for the first HARQ process or the unavailable HARQ process, or skips the first HARQ process or the unavailable HARQ process, or does not deliver the MAC PDU of the first HARQ process or the unavailable HARQ process to a lower layer, or does not use the CG resource of the first HARQ process or the unavailable HARQ process, or deprioritizes the uplink resource.

Based on the embodiments illustrated in FIG. 2 and or FIG. 3, using a scenario where the MAC layer and physical layer perform the wireless transmission-related processing based on a selection or usage rule for a first HARQ process or based on a transmission or processing mode for a first resource as an example, the above solution may be implemented as follows:

In S1, the base station transmits configuration information to the UE. The configuration information is used for CG transmission, HARQ selection/usage, CG resource usage/processing. In some embodiments, the configuration information includes at least one of the following items.
a) The configuration information includes uplink grant resource configuration. In some embodiments:
   i) The uplink grant resource configuration includes one or more PUSCH occasions.

In some embodiments, the uplink grant resource configuration includes CG configuration. A CG period may include one or more CG occasions.

ii) The uplink grant resource configuration includes available HARQ processes. In some embodiments, the uplink grant resource configuration includes the HARQ process number and/or HARQ process offset.

In some embodiments, the uplink grant resource configuration includes CG configuration. The configured HARQ process is the HARQ process available for CG configuration.

b) The network provides the first indication information to the UE. The first indication information is used to indicate whether to use the selection/usage rule for the first HARQ process, or select the HARQ process for transmission using a CG occasion (or current CG occasion) based on the selection/usage rule for the first HARQ process. Additionally or alternatively, the UE performs the first action based on the first indication information.

i) In some embodiments, the first indication information may be RRC-configured. In some embodiments, the first indication information may be carried in ConfiguredGrantConfig or other RRC signaling.

ii) In some embodiments, the first indication information may also be DCI or MAC CE. In some embodiments, the DCI may be CG activation/deactivation DCI.

In S2, the UE performs at least one of CG transmission, HARQ process selection, or CG resource usage/processing based on the network configuration information. Specifically, this includes at least one of the following items.
a) The CG transmission, the HARQ process selection, and the usage/processing of CG resource is performed by the MAC layer and the physical layer.
b) The UE selects or determines the HARQ process, or selects or determines the HARQ process for the uplink grant, or selects or determines the HARQ process corresponding/available to the CG resource, or selects or determines the HARQ process corresponding/available to each CG occasion of the CG resource, or selects or determines the HARQ process corresponding/available to the current CG resource. This may include at least one of:
   i) The UE selects or determines the HARQ process based on an HARQ calculation formula and/or UE implementation;
   ii) The UE selects or determines the HARQ process based on a priority of an LCH or a priority of the HARQ process; or
   iii) The UE selects or determines the HARQ process based on first indication information.

The above i) to iii) may be used alone, or at least two of the I) to III) may be used in combination.

In a case where a plurality of candidate HARQ processes for the uplink grant or the CG resource (or CG occasion) are present, or in a case where the candidate HARQ process for the uplink grant or the CG resource (or CG occasion) is selected by the UE, then the UE selects or determines whether to use a first HARQ process, or determines whether to deprioritize the first HARQ process, or determines whether to prioritize an HARQ process other than the first HARQ process, or determines whether the candidate HARQ process is an available HARQ process, or the UE determines whether to use an HARQ process for which the CGT/CGRT has not expired.
1) Based on the indication of the first indication information, the UE selects or determines whether to use the first HARQ process, or determines whether to deprioritize the first HARQ process, or determines whether to prioritize an HARQ process other than the first HARQ process, or determines whether the candidate HARQ process is an available HARQ process, or the UE determines whether to use an HARQ process for which the CGT/CGRT has not expired.
2) In some embodiments, the selection or determination of HARQ process is performed by the MAC layer or physical layer.
   In some embodiments, even if the CGT and/or CGRT of an HARQ process has not expired, the HARQ process may still be considered available for the current PUSCH. In some embodiments, the available HARQ process is an HARQ process for which the first timer has expired or is not running, or is an HARQ process corresponding to a gap greater than or equal to X. In some embodiments, the duration of the first timer may be shorter than that of the CGT.
3) In some embodiments, the first HARQ process includes an HARQ process in collision, an occupied HARQ process; or an unavailable/non-selectable HARQ process.
4) In some embodiments, the maintenance or calculation of the gap may be performed by the physical layer. In some embodiments, the determination of the relationship between the gap and X may be performed by the physical layer. In some embodiments, whether an HARQ process is available or whether an HARQ process is the first HARQ process may be determined by the physical layer. In some embodiments, the maintenance and/or related determination of the first timer may be performed by the physical layer and/or the MAC layer.
5) In some embodiments, the first HARQ process or the unavailable HARQ process is an HARQ process corresponding to a gap less than or equal to X. In some embodiments, an HARQ process corresponding to a gap greater than X is a non-first HARQ process or an available HARQ process. In some embodiments, in a case where a CGT and/or a CGRT is configured, or a CGT and/or a CGRT is running, the CGT and/or the CGRT may be stopped under the following condition: an HARQ process corresponding to a gap greater than X is selected for transmission of a current PUSCH, or a current PUSCH is selected for transmission using the HARQ process corresponding to the gap greater than X.

In some embodiments, X is a first time, wherein the first time is a time interval or a time threshold. In some embodiments, the first time is RRC-configured, predefined, or pre-configured. In some embodiments, the first time is a time for demodulation and/or rescheduling.

In some embodiments, the gap is a time interval between a current PUSCH and a previous PUSCH using a same HPI. In some embodiments, the current PUSCH may be a CG PUSCH or a CG occasion. In some embodiments, the previous PUSCH using the same HPI is a CG PUSCH or a CG occasion (in this case, in a case where the previous PUSCH is a DG, the HARQ process corresponding to the HPI is available, or the HARQ process corresponding to the HPI may be used for the current PUSCH, or the HARQ process corresponding to the HPI may be used for transmitting a new MAC PDU, or the MAC PDU in the HARQ process corresponding to the HPI may be overwritten).

In some embodiments, the gap includes an interval between a slot where an end symbol of a previous PUSCH (e.g., a second PUSCH) is located and a slot where an end symbol of a current PUSCH (e.g., a first PUSCH) is located. For example, the end symbol of the second PUSCH is in slot n, and the slot where the end symbol of the first PUSCH is located is no earlier than slot n+x, wherein x is a predefined value, then the HPI may be used by the first PUSCH. For example, the end symbol of the first PUSCH is in slot m, and the slot where the end symbol of the second PUSCH is located is no later than slot m-x, wherein x is a predefined value, then the HPI may be used by the first PUSCH. For example, the end symbol of the first PUSCH is in slot m, and the second PUSCH is not present within the x slots before the slot m (or the UE is not expected to transmit the second PUSCH within the x slots before the slot m), wherein x is a predefined value, then the HPI may be used by the first PUSCH. For example, the end symbol of the second PUSCH is in slot n, and the UE does not transmit the first PUSCH within the x slots after the slot n (or the UE is not expected to transmit the first PUSCH within the x slots after the slot n), wherein x is a predefined value, then the HPI may be used by the first PUSCH.

In some embodiments, the gap is an interval between a time-domain symbol occupied by a previous PUSCH (e.g., a second PUSCH) and a time-domain symbol occupied by a current PUSCH (e.g., a first PUSCH). That is, the gap is an interval between the start or end position (symbol P) of the second PUSCH and the start or end position (symbol Q) of the first PUSCH, wherein x is a predefined value. For example, the symbol Q is no earlier than the x^{th} symbol after the symbol P, the HPI may be used by the first PUSCH. For example, the symbol P is no later than the x^{th} symbol before the symbol Q, the HPI may be used by the first PUSCH. For example, the second PUSCH is not present within the x symbols before the symbol Q (or the terminal is not expected to transmit the second PUSCH within the x symbols before the symbol Q), the HPI may be used by the first PUSCH. For example, the terminal does not transmit the first PUSCH within the x symbols after the symbol P (or the terminal is not expected to transmit the first PUSCH within the x symbols after the symbol P), the HPI may be used by the first PUSCH.

Alternatively, a start point of the gap is a start or end time of a CG for a previous HARQ process with a same HPI, and an end point of the gap is a time prior to a start time or a start time of a CG for a next HARQ process with the same HPI.

Alternatively, the first HARQ process or the unavailable HARQ process is an HARQ process for which a first timer has not expired or is running. The non-first HARQ process or an available HARQ process is an HARQ process for which a first timer has expired or is not running. The first timer is configured over network RRC signaling. The configuration of the first timer at least includes a duration of the first timer. The first timer is configured for a CG and/or an HARQ process. For the first timer corresponding to a specific HARQ process, the first timer starts in a case where the HARQ process is selected or transmitted, or a MAC PDU of the HARQ process is assembled/transmitted/delivered to the physical layer. The first timer is a new timer. The first timer is stopped in a case where the CGT has expired.

In some embodiments, in a case where the physical layer determines whether an HARQ process is unavailable or is the first process, the physical layer indicates this information to the MAC layer. Alternatively, the physical layer indicates available HARQ process or non-first HARQ process to the MAC layer. Alternatively, the physical layer notifies the MAC layer of candidate HARQ process other than the unavailable HARQ process or the first HARQ process.

In a case where only one candidate HARQ process for the CG resource or CG occasion is present, or the candidate HARQ process for the CG resource or CG occasion is calculated based on a formula, then the UE may determine, based on the first indication information, whether to use the first HARQ process or whether the candidate HARQ process is an available HARQ process.
1) Based on the indication of the first indication information, the UE selects or determines whether to use the first HARQ process, or determines whether to deprioritize the first HARQ process, or determines whether to prioritize an HARQ process other than the first HARQ process, or determines whether the candidate HARQ process is an available HARQ process.
2) In some embodiments, the first HARQ process includes an HARQ process in collision, an occupied HARQ process; or an unavailable/non-selectable HARQ process.
3) In some embodiments, the first HARQ process or the unavailable HARQ process is an HARQ process corresponding to a gap less than or equal to X. In some embodiments, an HARQ process corresponding to a gap greater than X is a non-first HARQ process or an available HARQ process.

In some embodiments, X is a first time, wherein the first time is a time interval or a time threshold. In some embodiments, the first time is RRC-configured, predefined, or pre-configured. In some embodiments, the first time is a time for demodulation and/or rescheduling.

In some embodiments, the gap is a time interval between a current PUSCH and a previous PUSCH using a same HPI. In some embodiments, the current PUSCH may be a CG PUSCH or a CG occasion. In some embodiments, the previous PUSCH using the same HPI is a CG PUSCH or a CG occasion (in this case, in a case where the previous PUSCH is a DG, the HARQ process corresponding to the HPI is available, or the HARQ process corresponding to the HPI may be used for the current PUSCH, or the HARQ process corresponding to the HPI may be used for transmitting a new MAC PDU, or the MAC PDU in the HARQ process corresponding to the HPI may be overwritten).

Alternatively, a start point of the gap is a start or end time of a CG for a previous HARQ process with a same HPI, and an end point of the gap is a time prior to a start time or a start time of a CG for a next HARQ process with the same HPI.

Alternatively, the first HARQ process or the unavailable HARQ process is an HARQ process for which a first timer has not expired or is running. The non-first HARQ process or an available HARQ process is an HARQ process for which a first timer has expired or is not running. The first timer is configured over network RRC signaling. The configuration of the first timer at least includes a duration of the first timer. The first timer is configured for a CG and/or an HARQ process. For the first timer corresponding to a specific HARQ process, the first timer starts in a case where the HARQ process is selected or transmitted, or a MAC PDU of the HARQ process is assembled/transmitted/delivered to the physical layer. The first timer is a new timer. The first timer is stopped in a case where the CGT has expired. For an HARQ process corresponding to a first timer expired or not running, in a case where a CGT and/or a CGRT is configured, or a CGT and/or a CGRT is running, the CGT and/or the CGRT may be stopped under the following condition: the HARQ process is selected for transmission of a current PUSCH, or a current PUSCH is selected for transmission using the HARQ process.

In some embodiments, in a case where the physical layer determines whether an HARQ process is unavailable or is the first process, the physical layer indicates this information to the MAC layer. Alternatively, the physical layer indicates an available HARQ process or a non-first HARQ process to the MAC layer. Alternatively, the physical layer notifies the MAC layer of candidate HARQ process other than the unavailable HARQ process or the first HARQ process.

c) The UE performs the first action, or the UE performs the first action based on the first indication information.

i) In some embodiments, the first action includes at least one of: skipping the uplink grant, the CG occasion, or the CG PUSCH; deprioritizing the uplink grant, the CG occasion, or the CG PUSCH; deprioritizing the uplink resource corresponding to the unavailable HARQ process or the first HARQ process; not generating a corresponding new MAC PDU; not invoking a multiplexing and assembly entity; or not delivering a corresponding MAC PDU to a lower layer (e.g., the physical layer). The first action is performed under the following condition: the first action is performed at the MAC layer, for the first HARQ process or the unavailable HARQ process, the candidate HARQ process of an uplink resource includes the first HARQ process or the unavailable HARQ process.

The MAC layer performs the first action based on information indicated by the physical layer (e.g., in step b).

ii) In some embodiments, the first action includes at least one of: skipping the uplink grant, the CG occasion, or the CG PUSCH; deprioritizing the uplink grant, the CG occasion, or the CG PUSCH; deprioritizing the uplink resource corresponding to the unavailable HARQ process or the first HARQ process; retaining the existing HARQ PDU in the unavailable HARQ process or the first HARQ process; or ignoring or discarding a new/newly received MAC PDU for the unavailable HARQ process or the first HARQ process. The first action is performed under the following condition: the first action is performed at the physical layer, for the first HARQ process or the unavailable HARQ process, the candidate HARQ process of an uplink resource includes the first HARQ process or the unavailable HARQ process.

iii) For example, in a case where the first timer of an HARQ process is running or has not expired, or the first timer of an HARQ process for a CG occasion is running or has not expired, then this HARQ process is considered the unavailable HARQ process or the first HARQ process.

iv) For example, in a case where the gap corresponding to an HARQ process is less than X, or for a CG occasion, the gap corresponding to an HARQ process for a CG occasion is less than X, then this HARQ process is considered the unavailable HARQ process or the first HARQ process.

For example, for an HARQ process corresponding to a gap greater than X or an HARQ process corresponding to a first timer expired or not running, in a case where a CGT and/or a CGRT is configured, or a CGT and/or a CGRT is running, the CGT and/or the CGRT may be stopped under the following condition: the HARQ process is selected for transmission of a current PUSCH, or a current PUSCH is selected for transmission using the HARQ process.

v) For example, the physical layer deprioritizes the first HARQ process or the unavailable HARQ process, or does not select the first HARQ process or an unavailable HARQ process for the corresponding or current CG occasion transmission. The physical layer provides the information of the HARQ process to the MAC layer.

vi) For example, the MAC entity does not generate a new MAC PDU for the first HARQ process or the unavailable HARQ process, or skips the first HARQ process or the unavailable HARQ process, or does not deliver the MAC PDU of the first HARQ process or the unavailable HARQ process to a lower layer, or does not use the CG resource of the first HARQ process or the unavailable HARQ process, or assigns a low priority to the CG resource of the HARQ process, or does not use the CG resource of the HARQ process. The MAC layer performs the action based on the information of the HARQ process provided by the physical layer.

vii) For example, the physical layer deprioritizes the first HARQ process or the unavailable HARQ process, or does not select the first HARQ process or an unavailable HARQ process for the corresponding or current CG occasion transmission. Furthermore, the physical layer skips/discards a new MAC PDU for the HARQ process, or retains the original MAC PDU, or skips the CG resource corresponding to the HARQ process, or assigns a low priority to the CG resource of the HARQ process.

FIG. 5 illustrates a block diagram of an apparatus for processing wireless transmission according to some embodiments of the present disclosure. The apparatus may be configured to perform the processes applicable to the terminal device in the embodiments illustrated in FIG. 2 or FIG. 3. As illustrated in FIG. 5, the apparatus may include:

a processing module 501, configured to perform wireless transmission-related processing based on a selection or usage rule for a first HARQ process or based on a transmission or processing mode for a first resource, wherein the first HARQ process is an HARQ process satisfying a collision condition, and the first resource is a resource corresponding to the first HARQ process.

In some embodiments, the processing module is configured to: based on the selection or usage rule for the first HARQ process or based on the transmission or processing mode for the first resource, perform at least one of:
selecting or determining an HARQ process; or
performing a first action.

In some embodiments, the processing module is configured to:
select or determine an HARQ process for an uplink grant of the terminal device; or
select or determine at least one HARQ process for a plurality of uplink grants of the terminal device; or
select or determine an HARQ process corresponding to or available for a CG resource in the uplink grant; or
select or determine an HARQ process corresponding to or available for at least one CG occasion of the CG resource; or
select or determine an HARQ process corresponding to or available for at least one CG occasion within one period of the CG resource; or
select or determine an HARQ process corresponding to or available for each CG occasion within one period of the CG resource; or
select or determine an HARQ process corresponding to or available for each CG occasion of the CG resource; or
select or determine an HARQ process corresponding to or available for a current CG resource.

In some embodiments, the processing module is configured to perform at least one of:
select or determine the HARQ process based on an HARQ calculation formula and/or terminal device implementation;
select or determine the HARQ process based on a priority of an LCH or a priority of the HARQ process;
select or determine the HARQ process based on whether a collision occurs, whether the HARQ process is the first HARQ process, or whether the HARQ process is an available HARQ process; or
select or determine the HARQ process based on first indication information.

In some embodiments, the processing module is configured to select or determine the HARQ process in a first case, wherein the first case includes:
a plurality of candidate HARQ processes for an uplink grant of the terminal device, a plurality of candidate HARQ processes for at least one of a plurality of uplink grants of the terminal device, a plurality of candidate HARQ processes for a CG resource in the uplink grant, a plurality of candidate HARQ processes for at least one CG occasion of the CG resource, a plurality of candidate HARQ processes for at least one CG occasion within one period of the CG resource, a plurality of candidate HARQ processes for each CG occasion within one period of the CG resource, or a plurality of candidate HARQ processes for each CG occasion of the CG resource being present; or
a candidate HARQ process for an uplink grant of the terminal device, a candidate HARQ process for at least one of a plurality of uplink grants of the terminal device, a candidate HARQ process for a CG resource in the uplink grant, a candidate HARQ process for at least one CG occasion of the CG resource, a candidate HARQ process for at least one CG occasion within one period of the CG resource, a candidate HARQ process for each CG occasion within one period of the CG resource, or a candidate HARQ process for each CG occasion of the CG resource being selected by the terminal device.

In some embodiments, the processing module is configured to select or determine the HARQ process in a second case, wherein the second case includes:
a candidate HARQ process for a configured grant (CG) resource in an uplink grant of the terminal device, a candidate HARQ process for at least one CG occasion of the CG resource, a candidate HARQ process for at least one CG occasion within one period of the CG resource, a candidate HARQ process for each CG occasion within one period of the CG resource, or a candidate HARQ process for each CG occasion of the CG resource being determined by the terminal device based on a formula.

In some embodiments, the processing module is configured to:
select or determine whether to use the first HARQ process; or
determine whether to deprioritize the first HARQ process; or
determine whether to prioritize an HARQ process other than the first HARQ process; or
determine whether a candidate HARQ process is an available HARQ process; or
determine whether a candidate HARQ process is the first HARQ process; or
determine whether to use an HARQ process for which a CGT or a CGRT has not expired.
In some embodiments, the available HARQ process includes at least one of:
an HARQ process for which the CGT and/or the CGRT has not expired;
an HARQ process for which a first timer has expired or is not running; or
an HARQ process corresponding to a gap greater than or equal to X.
In some embodiments, the first HARQ process includes at least one of:
an HARQ process in collision;
an occupied HARQ process; or
an unavailable/non-selectable HARQ process.

In some embodiments, the first HARQ process or the unavailable HARQ process is an HARQ process corresponding to a gap less than or equal to X; and/or
a non-first HARQ process or an available HARQ process is an HARQ process corresponding to a gap greater than X.

In some embodiments, the processing module is further configured to, in a case where the CGT and/or the CGRT is configured, or the CGT and/or the CGRT is running, stop the CGT and/or the CGRT under the following conditions: an HARQ process corresponding to a gap greater than X is selected for transmission of a current PUSCH or a PUSCH is selected for transmission using an HARQ process corresponding to a gap greater than X; and/or a PUSCH that is selected for transmission using an HARQ process with a running CGT and/or a running CGRT is present.

In some embodiments, X is a time interval or time threshold.

In some embodiments, X is an RRC-configured, predefined, or preconfigured time interval or time threshold.

In some embodiments, X is a time for demodulation and/or rescheduling.

In some embodiments, the gap is a time interval between a current PUSCH and a previous PUSCH using a same HPI.

In some embodiments, the current PUSCH is a CG PUSCH or a CG occasion; and
the previous PUSCH using the same HPI is a CG PUSCH or a CG occasion, or the previous PUSCH using the same HPI is a DG PUSCH.

In some embodiments, the gap includes:
an interval between a slot where an end symbol of a previous PUSCH is located and a slot where an end symbol of a current PUSCH is located; or
an interval between a time-domain symbol occupied by a previous PUSCH and a time-domain symbol occupied by a current PUSCH.

In some embodiments, a start point of the gap is a start or end time of a CG for a previous HARQ process with a same HPI, and an end point of the gap is a time prior to a start time or a start time of a CG for a next HARQ process with the same HPI.

In some embodiments, the first HARQ process or the unavailable HARQ process is an HARQ process for which a first timer has not expired or is running; and/or
a non-first HARQ process or an available HARQ process is an HARQ process for which a first timer has expired or is not running.

In some embodiments, the first timer is configured over RRC signaling.

In some embodiments, the first timer satisfies at least one of the following conditions:
the first timer is configured for a CG and/or an HARQ process;
the first timer is started in a case where a corresponding HARQ process is selected or transmitted, or in a case where a MAC PDU of a corresponding HARQ process is assembled/transmitted/delivered to a physical layer;
the first timer is a new timer; or
the first timer is stopped in a case where a CGT is not running or has expired.

In some embodiments, the processing module is further configured to: in a case where a CGT and/or a CGRT is configured, or a CGT and/or a CGRT is running, stop the CGT and/or the CGRT under the following conditions: an HARQ process with an expired first timer is selected for transmission of a current PUSCH or a PUSCH is selected for transmission using an HARQ process with an expired first timer; and/or a PUSCH that is selected for transmission using an HARQ process with a running CGT and/or a running CGRT is present.

In some embodiments, the transmission or processing mode for a first resource, or the first action, includes at least one of:
skipping an uplink grant, a CG occasion, or a CG PUSCH;
discarding or deprioritizing an uplink grant, a CG occasion, or a CG PUSCH;
discarding or deprioritizing an uplink grant, a CG occasion, or a CG PUSCH for an unavailable HARQ process or the first HARQ process;
not generating a corresponding new MAC PDU;
not invoking a multiplexing and assembly entity; or
not delivering a corresponding MAC PDU to a lower layer.

In some embodiments, the first action is performed under the following conditions:
a candidate HARQ process of an uplink resource includes the first HARQ process or an unavailable HARQ process; or
an uplink resource corresponds only to the first HARQ process or an unavailable HARQ process.
In some embodiments, the first indication information is used to indicate whether the terminal device enables the selection or usage rule of the first HARQ process; or
the first indication information is used to instruct the terminal device to select an HARQ process for transmission of an uplink grant or a CG occasion based on the selection or usage rule of the first HARQ process.

In some embodiments, the first indication information is used to instruct the terminal device to perform the first action or perform the transmission or processing mode for a first resource.

In some embodiments, the first indication information is RRC-configured.

In some embodiments, the first indication information is carried in a dedicated RRC message; or the first indication information is carried in ConfiguredGrantConfig; or the first indication information is carried in RRC signaling other than ConfiguredGrantConfig.

In some embodiments, the first indication information is DCI or a MAC CE.

In some embodiments, the DCI is a CG activation/deactivation DCI.

In some embodiments, the apparatus further includes:
a receiving module, configured to receive configuration information or scheduling information, wherein the configuration information or scheduling information is used for an uplink grant resource configuration, a CG resource configuration, uplink grant resource transmission, CG transmission, HARQ selection/usage, uplink resource usage/processing, or CG resource usage/processing.

In some embodiments, the uplink grant resource configuration includes at least one of:
one or more PUSCH occasions;
one or more scheduled PUSCH occasions, or one or more PUSCH occasions scheduled within a period;
a CG configuration, wherein one CG period includes one or more CG occasions; or
a selectable HARQ process.

In some embodiments, the selectable HARQ process is an HARQ process available for the PUSCH occasion or the CG configuration.

In some embodiments, the MAC layer performs the wireless transmission-related processing based on the selection or usage rule for the first HARQ process or based on the transmission or processing mode for the first resource; or

The MAC layer and the physical layer perform the wireless transmission-related processing based on the selection or usage rule for the first HARQ process or based on the transmission or processing mode for the first resource.

FIG. 6 illustrates a schematic structural diagram of a device 600 according to some embodiments of the present disclosure is shown. The device 600 includes: a processor 601, a receiver 602, a transmitter 603, a memory 604, and a bus 605.

The processor 601 includes one or more processing cores. The processor 601 runs various functional applications and performs information processing by running software programs and modules.

The receiver 602 and the transmitter 603 may be implemented as a communication assembly, which may be a communication chip. The communication chip is also referred to as a transceiver.

The memory 604 is connected to the processor 601 via the bus 605.

The memory 604 is configured to store one or more computer programs, and the processor 601 is configured to run the one or more computer programs to perform the processes performed by the terminal in the above method embodiments.

In addition, the memory 604 is practiced by any type of volatile or non-volatile storage device or a combination thereof. The volatile or non-volatile storage device includes but is not limited to: a magnetic or optical disk, an electrically erasable programmable read-only memory, an erasable programmable read-only memory, a static random access memory, a read-only memory, a magnetic memory, a flash memory, or a programmable read-only memory.

The device may be implemented as the terminal device or the network device in the above method embodiments.

In some exemplary embodiments, the device includes a processor, a memory, and a transceiver (which may include a receiver for receiving information and a transmitter for transmitting information).

In the case that the above device is implemented as the terminal device in the above method embodiments,
the processor is configured to perform wireless transmission-related processing based on a selection or usage rule for a first HARQ process or based on a transmission or processing mode for a first resource, wherein the first HARQ process is an HARQ process satisfying a collision condition, and the first resource is a resource corresponding to the first HARQ process.

For the processes performed by the transceiver and the processor, reference may be made to all or a portion of the processes performed by the terminal device in the embodiments shown in FIG. 2 or FIG. 3, which are not described herein any further.

The embodiments of the present disclosure further provide a computer-readable storage medium storing one or more computer programs. The one or more computer programs, when loaded and run by a processor, cause the processor to perform the processes performed by the terminal device or the network device in the method as illustrated in FIG. 2 or FIG. 3.

The present disclosure further provides a computer program product or computer program. The computer program product or computer program includes one or more computer instructions stored in a computer-readable storage medium. The one or more computer instructions, when read from the computer-readable storage medium and executed by a processor of a terminal device or a network device, cause the terminal device or the network device to perform the processes performed by the terminal device or the network device in the method as illustrated in FIG. 2 or FIG. 3.

The present disclosure further provides a computer program. The computer program includes one or more computer instructions stored in a computer-readable storage medium. The one or more computer instructions, when read from the computer-readable storage medium and executed by a processor of a terminal device or a network device, cause the terminal device or the network device to perform the processes performed by the terminal device or the network device in the method as illustrated in FIG. 2 or FIG. 3.

The present disclosure further provides a chip applicable to a terminal. The chip is configured to perform the processes performed by the terminal device or the network device in the method as illustrated in FIG. 2 or FIG. 3.

A person skilled in the art shall appreciate that in the foregoing one or more examples, the functions described in the embodiments of the present disclosure may be implemented by hardware, software, firmware, or any combination thereof. The functions, when implemented by software, may be stored in a computer-readable medium or transmitted as one or more instructions or codes on the computer-readable medium. The computer-readable medium includes a computer storage medium and a communication medium. The communication medium includes any medium that facilitates transfer of a computer program from one place to another. The storage medium may be any available medium accessible by a general-purpose computer or a special-purpose computer.

Described above are merely exemplary embodiments of the present disclosure and are not intended to limit the present disclosure. Any modifications, equivalent replacements, improvements, and the like made within the spirit and principles of the present disclosure shall fall within the protection scope of the present disclosure.

## Claims

1. A method for processing wireless transmission, applicable to a terminal device, the method comprising:
performing wireless transmission-related processing based on a selection or usage rule for a first hybrid automatic repeat request (HARQ) process or based on a transmission or processing mode for a first resource, wherein the first HARQ process is an HARQ process satisfying a collision condition, and the first resource is a resource corresponding to the first HARQ process.

2. The method according to claim 1, wherein performing the wireless transmission-related processing based on the selection or usage rule for the first HARQ process or based on the transmission or processing mode for the first resource comprises:
based on the selection or usage rule for the first HARQ process or based on the transmission or processing mode for the first resource, performing at least one of:
selecting or determining an HARQ process; or
performing a first action.

3. The method according to claim 2, wherein selecting or determining the HARQ process comprises:
selecting or determining an HARQ process for an uplink grant of the terminal device; or
selecting or determining at least one HARQ process for a plurality of uplink grants of the terminal device; or
selecting or determining an HARQ process corresponding to or available for a configured grant (CG) resource in an uplink grant; or
selecting or determining an HARQ process corresponding to or available for at least one CG occasion of a CG resource; or
selecting or determining an HARQ process corresponding to or available for at least one CG occasion within one period of a CG resource; or
selecting or determining an HARQ process corresponding to or available for each CG occasion within one period of a CG resource; or
selecting or determining an HARQ process corresponding to or available for each CG occasion of a CG resource; or
selecting or determining an HARQ process corresponding to or available for a current CG resource.

4. The method according to claim 2 or 3, wherein selecting or determining the HARQ process comprises at least one of:
selecting or determining the HARQ process based on an HARQ calculation formula and/or terminal device implementation;
selecting or determining the HARQ process based on a priority of a logical channel (LCH) or a priority of the HARQ process;
selecting or determining the HARQ process based on whether a collision occurs, whether the HARQ process is the first HARQ process, or whether the HARQ process is an available HARQ process; or
selecting or determining the HARQ process based on first indication information.

5. The method according to any one of claims 2 to 4, wherein selecting or determining the HARQ process comprises:
selecting or determining the HARQ process in a first case, wherein the first case comprises:
a plurality of candidate HARQ processes for an uplink grant of the terminal device, a plurality of candidate HARQ processes for at least one of a plurality of uplink grants of the terminal device, a plurality of candidate HARQ processes for a configured grant (CG) resource in an uplink grant, a plurality of candidate HARQ processes for at least one CG occasion of a CG resource, a plurality of candidate HARQ processes for at least one CG occasion within one period of a CG resource, a plurality of candidate HARQ processes for each CG occasion within one period of a CG resource, or a plurality of candidate HARQ processes for each CG occasion of a CG resource being present; or
a candidate HARQ process for an uplink grant of the terminal device, a candidate HARQ process for at least one of a plurality of uplink grants of the terminal device, a candidate HARQ process for a CG resource in an uplink grant, a candidate HARQ process for at least one CG occasion of a CG resource, a candidate HARQ process for at least one CG occasion within one period of a CG resource, a candidate HARQ process for each CG occasion within one period of a CG resource, or a candidate HARQ process for each CG occasion of a CG resource being selected by the terminal device.

6. The method according to claim 4, wherein selecting or determining the HARQ process comprises:
selecting or determining the HARQ process in a second case, wherein the second case comprises:
a candidate HARQ process for a configured grant (CG) resource in an uplink grant of the terminal device, a candidate HARQ process for at least one CG occasion of a CG resource, a candidate HARQ process for at least one CG occasion within one period of a CG resource, a candidate HARQ process for each CG occasion within one period of a CG resource, or a candidate HARQ process for each CG occasion of a CG resource being determined by the terminal device based on a formula.

7. The method according to claim 5 or 6, wherein selecting or determining the HARQ process comprises:
selecting or determining whether to use the first HARQ process; or
determining whether to deprioritize the first HARQ process; or
determining whether to prioritize an HARQ process other than the first HARQ process; or
determining whether a candidate HARQ process is an available HARQ process; or
determining whether a candidate HARQ process is the first HARQ process; or
determining whether to use an HARQ process for which a configured grant timer (CGT) or configured grant retransmission timer (CGRT) has not expired.

8. The method according to claim 7, wherein the available HARQ process comprises at least one of:
an HARQ process for which the CGT and/or the CGRT has not expired;
an HARQ process for which a first timer has expired or is not running; or
an HARQ process corresponding to a gap greater than or equal to X.

9. The method according to any one of claims 1 to 8, wherein the first HARQ process comprises at least one of:
an HARQ process in collision;
an occupied HARQ process; or
an unavailable/non-selectable HARQ process.

10. The method according to claim 9, wherein
the first HARQ process or the unavailable HARQ process is an HARQ process corresponding to a gap less than or equal to X; and/or
a non-first HARQ process or an available HARQ process is an HARQ process corresponding to a gap greater than X.

11. The method according to claim 10, further comprising:
in a case where a configured grant timer (CGT) and/or a configured grant retransmission timer (CGRT) is configured, or a CGT and/or a CGRT is running, stopping the CGT and/or the CGRT under the following conditions:
an HARQ process corresponding to a gap greater than X is selected for transmission of a current physical uplink shared channel (PUSCH) or a PUSCH is selected for transmission using an HARQ process corresponding to a gap greater than X; and/or
a PUSCH is selected for transmission using an HARQ process with a running CGT and/or a running CGRT.

12. The method according to claim 10 or 11, wherein X is a time interval or time threshold.

13. The method according to claim 12, wherein X is a radio resource control (RRC)-configured, predefined, or preconfigured time interval or time threshold.

14. The method according to claim 12 or 13, wherein X is a time for demodulation and/or rescheduling.

15. The method according to any one of claims 8, 10 to 14, wherein the gap is a time interval between a current physical uplink shared channel (PUSCH) and a previous PUSCH using a same HARQ process identifier (HPI).

16. The method according to claim 15, wherein
the current PUSCH is a CG PUSCH or a CG occasion; and
the previous PUSCH using the same HPI is a CG PUSCH or a CG occasion, or the previous PUSCH using the same HPI is a dynamic uplink grant (DG) PUSCH.

17. The method according to any one of claims 8, 10 to 16, wherein the gap comprises:
an interval between a slot where an end symbol of a previous physical uplink shared channel (PUSCH) is located and a slot where an end symbol of a current PUSCH is located; or
an interval between a time-domain symbol occupied by a previous physical uplink shared channel (PUSCH) and a time-domain symbol occupied by a current PUSCH.

18. The method according to any one of claims 8, 10 to 17, wherein
a start point of the gap is a start or end time of a CG for a previous HARQ process with a same HARQ process identifier (HPI), and
an end point of the gap is a time prior to a start time or a start time of a CG for a next HARQ process with the same HPI.

19. The method according to claim 9, wherein
the first HARQ process or the unavailable HARQ process is an HARQ process for which a first timer has not expired or is running; and/or
a non-first HARQ process or an available HARQ process is an HARQ process for which a first timer has expired or is not running.

20. The method according to claim 19, wherein the first timer is configured over radio resource control (RRC) signaling.

21. The method according to claim 19 or 20, wherein the first timer satisfies at least one of the following conditions:
the first timer is configured for a configured grant (CG) and/or an HARQ process;
the first timer is started in a case where a corresponding HARQ process is selected or transmitted or in a case where a medium access control (MAC) protocol data unit (PDU) of a corresponding HARQ process is assembled/transmitted/delivered to a physical layer;
the first timer is a new timer; or
the first timer is stopped in a case where a configured grant timer (CGT) is not running or has expired.

22. The method according to any one of claims 19 to 21, further comprising:
in a case where a configured grant timer (CGT) and/or a configured grant retransmission timer (CGRT) is configured, or a CGT and/or a CGRT is running, stopping the CGT and/or the CGRT under any one of the following conditions:
an HARQ process with an expired first timer is selected for transmission of a current physical uplink shared channel (PUSCH); or
a PUSCH is selected for transmission using an HARQ process with an expired first timer; or
a PUSCH is selected for transmission using an HARQ process with a running CGT and/or a running CGRT.

23. The method according to claim 2, wherein the transmission or processing mode for a first resource, or the first action, comprises at least one of:
skipping an uplink grant, a configured grant (CG) occasion, or a CG physical uplink shared channel (PUSCH);
discarding or deprioritizing an uplink grant, a CG occasion, or a CG PUSCH;
discarding or deprioritizing an uplink grant, a CG occasion, or a CG PUSCH for an unavailable HARQ process or the first HARQ process;
not generating a corresponding new medium access control (MAC) protocol data unit (PDU);
not invoking a multiplexing and assembly entity; or
not delivering a corresponding MAC PDU to a lower layer.

24. The method according to claim 23, wherein the first action is performed under the following conditions:
a candidate HARQ process of an uplink resource comprises the first HARQ process or an unavailable HARQ process; or
an uplink resource corresponds only to the first HARQ process or an unavailable HARQ process.

25. The method according to claim 4, wherein
the first indication information is used to indicate whether the terminal device enables the selection or usage rule of the first HARQ process; or
the first indication information is used to instruct the terminal device to select an HARQ process for transmission of an uplink grant or a configured grant (CG) occasion based on the selection or usage rule of the first HARQ process.

26. The method according to claim 4, wherein
the first indication information is used to instruct the terminal device to perform the first action or perform the transmission or processing mode for the first resource.

27. The method according to claim 25 or 26, wherein the first indication information is configured using radio resource control (RRC).

28. The method according to claim 27, wherein
the first indication information is carried in a dedicated RRC message; or
the first indication information is carried in ConfiguredGrantConfig; or
the first indication information is carried in RRC signaling other than ConfiguredGrantConfig.

29. The method according to claim 25, wherein the first indication information is downlink control information (DCI) or a medium access control (MAC) control element (CE).

30. The method according to claim 29, wherein the DCI is a CG activation/deactivation DCI.

31. The method according to any one of claims 1 to 30, further comprising:
receiving configuration information or scheduling information, wherein the configuration information or scheduling information is used for an uplink grant resource configuration, a configured grant (CG) resource configuration, uplink grant resource transmission, CG transmission, HARQ selection/usage, uplink resource usage/processing, or CG resource usage/processing.

32. The method according to claim 31, wherein the uplink grant resource configuration comprises at least one of:
one or more physical uplink shared channel (PUSCH) occasions;
one or more scheduled PUSCH occasions, or one or more PUSCH occasions scheduled within a period;
a CG configuration, wherein one CG period comprises one or more CG occasions; or
a selectable HARQ process.

33. The method according to claim 32, wherein the selectable HARQ process is an HARQ process available for the PUSCH occasion or the CG configuration.

34. The method according to any one of claims 1 to 33, wherein
the wireless transmission-related processing is performed by a medium access control (MAC) layer based on the selection or usage rule for the first HARQ process or based on the transmission or processing mode for the first resource; or
the wireless transmission-related processing is performed by a MAC layer and a physical layer based on the selection or usage rule for the first HARQ process or based on the transmission or processing mode for the first resource.

35. A apparatus for processing wireless transmission, comprising:
a processing module, configured to perform wireless transmission-related processing based on a selection or usage rule for a first hybrid automatic repeat request (HARQ) process or based on a transmission or processing mode for a first resource, wherein the first HARQ process is an HARQ process satisfying a collision condition, and the first resource is a resource corresponding to the first HARQ process.

36. A terminal device, comprising: a processor, a memory, and a transceiver;
wherein the processor is configured to perform wireless transmission-related processing based on a selection or usage rule for a first hybrid automatic repeat request (HARQ) process or based on a transmission or processing mode for a first resource, wherein the first HARQ process is an HARQ process satisfying a collision condition, and the first resource is a resource corresponding to the first HARQ process.

37. A computer-readable storage medium, storing one or more computer programs therein, wherein the one or more computer programs, when loaded and run by a processor, cause the processor to perform the method for processing wireless transmission as defined in any one of claims 1 to 34.

38. A computer program product, comprising: one or more computer instructions stored in a computer-readable storage medium, wherein the one or more computer instructions, when loaded and executed by a processor of a terminal device or a network device, cause the terminal device or the network device to perform the method for processing wireless transmission as defined in any one of claims 1 to 34.

39. A computer program, comprising: one or more computer instructions, wherein the one or more computer instructions, when loaded and executed by a processor of a terminal device or a network device, cause the terminal device or the network device to perform the method for processing wireless transmission as defined in any one of claims 1 to 34.

40. A chip, configured to perform the method for processing wireless transmission as defined in any one of claims 1 to 34.
